# EUROPÄISCHE PATENTSCHRIFT

(11) **EP 2 254 680 B1**
(45) Veröffentlichungstag und Bekanntmachung des Hinweises auf die Patenterteilung: **07.01.2015**
(21) Anmeldenummer: 09716085.7
(22) Anmeldetag: 26.02.2009
(51) Int. Cl.: B01D 46/24, B01D 46/00, B01D 46/52, F02M 35/024

(54) **FILTEREINRICHTUNG, INSBESONDERE LUFTFILTER FÜR EINE BRENNKRAFTMASCHINE**
FILTER DEVICE, IN PARTICULAR AIR FILTER FOR AN INTERNAL COMBUSTION ENGINE
DISPOSITIF FILTRANT, EN PARTICULIER FILTRE À AIR POUR UN MOTEUR À COMBUSTION INTERNE

(30) Priorität: 26.02.2008 DE 102008011186; 23.12.2008 DE 102008062954
(43) Veröffentlichungstag der Anmeldung: 01.12.2010
(73) Patentinhaber: Mann + Hummel GmbH, 71638 Ludwigsburg (DE)
(72) Erfinder: BECKER, Stefan, 68305 Mannheim (DE); LULEY, Oliver, 67227 Frankenthal (DE); MÜNKEL, Karlheinz, 75038 Oberderdingen (DE); WOLF, Michael, 66539 Neunkirchen (DE)
(74) Vertreter: Seyboth, Matthias
(86) Internationale Anmeldenummer: PCT/EP2009/052316
(87) Internationale Veröffentlichungsnummer: WO 2009/106588

(56) Entgegenhaltungen:
- DE-U1- 20 320 728
- FR-A- 1 288 229
- GB-A- 562 103
- GB-A- 891 854
- US-B2- 6 511 599

## Beschreibung

### Technisches Gebiet

Die Erfindung bezieht sich auf eine Filtereinrichtung, insbesondere auf einen Luftfilter für eine Brennkraftmaschine.

### Stand der Technik

Aus der EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyklon-Vorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsrichtung durchströmt.

Als Hauptfilterelement, welches in der Filterpatrone aufgenommen ist, kommen beispielsweise Wickelfilter in Betracht, die aus einem um einen Kern gewickelten, gewellten Filtermaterial bestehen, wobei aufgrund der Wellenform axiale Strömungskanäle durch das Filterelement gebildet sind, die wechselseitig an der Stirnseite verschlossen sind. Ein derartiges Filterelement ist zum Beispiel aus US 7,008,467 B2 bekannt.

Bekannt sind außerdem Filterelemente, die aus einem sternförmig gefalteten Filterelement in Form eines Filterbalges bestehen, dessen Filterfalten in radiale Richtung verlaufen, wobei die Stirnkanten der Filterfalten sich im Wesentlichen in Achsrichtung erstrecken.

Aus EP 1 494 785 B1 ist ein Luftreiniger und eine Methode zu dessen Installation bekannt. Ein Luftfilter mit einer ersten Stufe und mit einem Vorfilter mit Mehrfachzentrifugalabscheidern mit einem Staubabscheiderrohr und einer zweiten Stufe mit einer Luftfilterpatrone ist stromabwärts von dem Rohrfilter angeordnet. Die Luftfilterpatrone umfasst ein Z-Filtermedium, ein Dichtungselement, welches sich vollständig um den Umfang der Z-Filter-Mediumkonstruktion erstreckt und welches eine Eintritts-Strömungsfläche und eine Austritts-Strömungsfläche besitzt. Das Z-Filtermedium enthält mehrere Eintrittsfaltenkanäle, die an der Eintritts-Strömungsfläche offen sind und an der Austritts-Strömungsfläche für die Durchströmung von Luft verschlossen sind. Es sind mehrere Austrittsfaltenkanäle vorgesehen, die an der Eintritts-Strömungsfläche verschlossen sind und die an der Austritts-Strömungsfläche für die Auslassströmung offen sind.

Der Luftfilter umfasst ein Gehäuse mit mindestens einem ersten und einem zweiten Teil, wobei das Dichtungselement eine erste Seite und eine gegenüberliegende zweite Seite sowie eine äußere ringförmige Oberfläche besitzt.

Das Dichtungselement ist darüber hinaus zwischen dem ersten Teil und dem zweiten Teil des Gehäuses angeordnet, um eine Axialabdichtung zu bilden.

Jeder der Zentrifugalabscheider besitzt eine Seitenwand, einen Innenraum und Leitbleche; ferner ist ein Sicherheitselement operativ in dem Gehäuse abströmseitig nach dem primären Filterelement installiert.

Das Sicherheitselement enthält einen Rahmen mit einer äußeren umgebenden Schürze, eine an der umgebenden Schürze angeordnete Dichtungspackung, einen innerhalb des Rahmens angeordneten Faltenfilter-Medium-Bereich sowie einen Handgriff.

Die Dichtungspackung bildet darüber hinaus eine Dichtung innerhalb des Gehäuses.

Mehrfachbalgfilter sind aus der US 6,511,599 und der GB 891,854 sowie der FR 1288229 bekannt.

### Offenbarung der Erfindung

Der vorliegenden Erfindung liegt die Aufgabe zugrunde, mit einfachen konstruktiven Maßnahmen eine Filtereinrichtung zu schaffen, die sich durch eine hohe Filtrationsleistung auszeichnet, wobei die Filtereinrichtung mit geringem Aufwand gewartet werden soll.

Diese Aufgabe wird erfindungsgemäß durch die Merkmale der unabhängigen Patentansprüche gelöst.

Gemäß einer ersten Ausführungsvariante des der Erfindung zugrunde liegenden Gedankens weist eine Filtereinrichtung in einem Filtergehäuse ein Filterelement auf, welches als Mehrfachbalgfilter, so z.B. als Zweifachbalgfilter, mit zumindest zwei radial ineinandergesetzten Filterbälgen ausgebildet ist. Zwischen diesen wird ein Strömungsraum für das zu filtrierende Fluid gebildet, wobei der Strömungsraum mit einer Stirnseite des Filterelementes in Verbindung steht. Jeder der zumindest zwei radial ineinandergesetzten Filterbälge ist als Sternfilter mit sternförmig angeordneten, sich in Radialrichtung erstreckenden Filterfalten mit axial verlaufenden Stirnkanten ausgebildet. Die radial innenliegenden Stirnkanten der Falten des äußeren Faltenbalges sowie die radial außenliegenden Stirnkanten der Falten des innenliegenden Filterbalges begrenzen jeweils den Strömungsraum, der sowohl zum Ableiten des gereinigten Fluides dient als auch zum Heranführen von ungereinigtem Fluid.

Weiterhin ist an mindestens einer der Stirnseiten des Filterelements ein Dichtring angeordnet, welcher eine Abdichtung zwischen dem bevorzugt als Mehrfachbalgfilter ausgebildeten Filterbalg und dem Filtergehäuse abdichtet. Der Dichtring dient insbesondere zur strömungsdichtenden Separierung der Rohgasseite von der Reingasseite des Filterelementes und verhindert Fehlluftströme, die den Wirkungsgrad der erfindungsgemäß vorgeschlagenen Filtereinrichtung beeinträchtigen könnten. Der Dichtring wird zweckmäßigerweise axial zwischen Filterelement und Gehäuseinnenseite eingeklemmt und in Axialrichtung kraftbeaufschlagt. Grundsätzlich kann auch eine radiale Kraftbeaufschlagung des Dichtringes bzw. eine Kombination von axialer und radialer Kraftbeaufschlagung vorgenommen werden.

In einer ersten Ausführungsvariante des Dichtringes kann dieser zum Beispiel an einer aus Kunststoffmaterial gefertigten Endscheibe angeordnet sein und zum Beispiel als Dichtring mit einer Doppellippe ausgeführt sein. Der Dichtring kann aus TPE, d.h. einem thermoplastischen Elastomer, gefertigt sein, welches zum Beispiel einen auf Kunststoffspritzgussmaschinen verarbeitbaren Dichtungswerkstoff darstellt. Eine Fertigung ist auch im Zweikomponentenspritzgussverfahren möglich, bei dem in der Regel eine harte Komponente und dann eine weiche Dichtungskomponente gespritzt werden. Der Dichtring kann aufgeklebt, geschweißt oder auch eingeknüpft werden. Eine Fertigung kann auch durch andere Kunststoffverarbeitungsverfahren außer dem Zweikomponentenverfahren erreicht werden. Die Herstellung des Dichtringes mit einer Doppellippe ist nicht zwingend erforderlich, es können selbstverständlich auch andere Dichtungsprofile abweichend von einer Doppellippenkonfiguration hergestellt werden. Die Doppellippe liegt auf einem ringförmig verlaufenden Absatz an der Oberseite einer Endscheibe auf. Zwischen den Einzellippen der als Doppellippe ausgebildeten TPE-Dichtung wird ein Abstand vorgehalten, welcher der als Doppellippe ausgebildeten TPE-Dichtung die erforderliche Elastizität verleiht. Bei Axialkraftbeaufschlagung des als TPE-Doppellippe ausgebildeten Dichtelementes erfolgt eine Kompression der beiden Einzellippen und ein Stauchen des Materials in den Freiraum, der zwischen den beiden Einzellippen der als Doppellippe ausgebildeten Dichtung vorgehalten wird. Die Axialkraftbeaufschlagung der als Doppellippe ausgebildeten TPE-Dichtung erfolgt nach Einbau des Filterelementes in das Filtergehäuse, was zum Beispiel durch einen seitlichen Einschub erfolgen kann bei Anstellung des Filterelementes an einen Anschlagflansch im Inneren des Filtergehäuses der erfindungsgemäß vorgeschlagenen Filtereinrichtung.

In einer weiteren Ausführungsvariante der Abdichtung zwischen dem Filtergehäuse und dem Filterelement kann der Dichtring als Zweikomponentenspritzgussteil ausgebildet werden und eine ringförmig umlaufende, von einem weichen Kunststoffmaterial begrenzte Ausnehmung bilden, wobei das weiche, elastische Material von einem steiferen, härteren Kunststoffmaterial umschlossen ist. In die vom weichen Kunststoffmaterial begrenzte Ausnehmung des umlaufenden Dichtringes ragt bei der Montage des Dichtringes am Filtergehäuse ein umlaufender Vorsprung hinein. Die endgültige Abdichtung zwischen dem umlaufend ausgebildeten Vorsprung am Filtergehäuse und dieser Ausführungsvariante des Dichtringes erfolgt beim Fügen des Filterelementes, eines diesem vorgeschalteten Zyklon-Vorabscheiders, über clipsartig ausgebildete Verschlusselemente. Durch diese clipsartig am Umfang des Filtergehäuses ausgebildeten Verschlusselemente wird die in axiale Richtung wirkende Dichtkraft erzeugt, welche den umlaufenden Vorsprung am Filtergehäuse in die Ausnehmung des Dichtringes stellt, die von der weicheren Kunststoffkomponente gebildet ist und ihrerseits am Dichtring von dem härteren, steiferen Kunststoffmaterial umschlossen ist.

In vorteilhafter Weise befindet sich der Dichtring gemäß der obenstehend skizzierten zwei Ausführungsvarianten an einer radial außenliegenden Seite des Filterelementes der erfindungsgemäß vorgeschlagenen Filtereinrichtung, insbesondere in einem Übergangsbereich zwischen axialer Stirnseite und radial außenliegender Mantelfläche des Filterelementes. Dadurch wird ermöglicht, zumindest einen Teilstrom des zu filtrierenden Fluides über die radial außenliegende Mantelfläche des Filterelementes heranzuführen und zur Filtration radial durch das Filterelement bis zum Erreichen des Strömungsraumes zwischen den beiden Filterbälgen hindurchzuführen.

Als besonders vorteilhaft hat sich erwiesen, dass der zum Beispiel außenliegend erste Filterbalg in axiale Richtung angeströmt wird und die axiale Abströmung über Strömungskanäle des zweiten Filterbalges beispielsweise des radial innen liegenden Filterbalges erfolgt.

Um die Anströmungs- bzw. Abströmungsquerschnitte in gewünschter Weise zu erreichen, werden Abdeckelemente, die zum Beispiel aus PUR-Material gefertigt werden können, insbesondere Abdeckscheiben bzw. Abdeckringe an den entsprechenden axialen Stirnseiten der stirnkantenverleimt ausgebildeten beiden Filterbälge angeordnet. So ist die axiale Stirnseite des radial innenliegenden Filterbalges an der Anströmseite des Filterelementes von einem Abdeckring überdeckt, so dass an dieser Stelle eine axiale Anströmung ausgeschlossen ist.

Eine Abdeckscheibe befindet sich in vorteilhafter Weise abströmseitig am inneren Faltenbalg. Diese verschließt den innenliegenden Anströmraum innerhalb des Faltenbalges in axiale Richtung, um eine Fehlluftleitung unmittelbar zwischen Roh- und Reinseite zu verhindern. Die axiale Stirnseite des innenliegenden Filterbalges kann dabei frei von einer Abdeckung sein, so dass hierüber eine axiale Abströmung im Grundsatz möglich ist. Dies gilt für den Fall, dass die Falten einseitig verklebt sind.

Zugleich ist die axiale Stirnseite im Abströmbereich des radial außenliegenden Filterbalges von einem Abdeckring überdeckt, der an dieser Stelle die axiale Abströmung verhindert.

Des Weiteren ist es zweckmäßig, die Falten einseitig zu verkleben. Vorteilhafterweise wird dies pro Filterbalg so ausgeführt, dass nur an einer axialen Stirnseite das Zusammenheften der Stirnkanten der Filterfalten erfolgt, wohingegen die Stirnkanten der Filterfalten an der gegenüberliegenden Stirnseite von einem Abdeckelement abgedeckt sind. Bezogen auf die beiden Filterbälge wird das Zusammenheften der Stirnkanten der Filterfalten und die Abdeckung wechselseitig durchgeführt, so dass beispielsweise am radial außenliegenden Filterbalg die Stirnkanten verklebt und auf gegenüberliegender axialer Stirnseite von einem Abdeckring abgedeckt sind und am radial innenliegenden Filterbalg die axiale Anströmseite von einer Abdeckscheibe überdeckt ist. Die Stirnkanten auf der gegenüberliegenden axialen Abströmseite sind zusammengeheftet. Durch das Zusammenheften der Stirnkanten entstehen in Achsrichtung verlaufende Strömungsräume bzw. Kanäle, wobei im Zusammenhang mit den Abdeckelementen sichergestellt ist, dass das herangeführte Fluid die Filterwandung in radiale Richtung durchströmt.

Wenngleich in Bezug auf den Dichtring gemäß den obenstehend erläuterten Ausführungsvarianten dieser zum Beispiel als Doppellippe aus TPE durch zum Beispiel das 2K-Verfahren hergestellt werden kann, so ist es auch möglich, eine umlaufende Dichtung nicht am in das Filtergehäuse einzusetzenden Filterelement, das bevorzugt als Mehrfachbalgfilter, so zum Beispiel als Zweifachbalgfilter ausgebildet ist, auszubilden, sondern das umlaufende Dichtelement im Inneren des Filtergehäuses anzuordnen. Dazu kann zum Beispiel das ansonsten an der Dichtseite des Filterelementes ausgebildete, als Doppellippe ausgeführte Dichtelement in eine Seitenwand auf der Anströmseite des Filtergehäuses verlegt werden. Ebenso ist es möglich, die Zweikomponenten-Kunststoffspritzgussabdichtung nicht am Filtergehäuse, sondern zum Beispiel an der dem Filtergehäuse zuweisenden Stirnseite des Zyklon-Vorabscheiders anzuspritzen.

Das zum Beispiel in einer Ausführungsvariante an seiner Oberseite mit einer umlaufenden, als Doppellippe ausgeführten TPE-Dichtung versehene Filterelement, bevorzugt ein Zweifachbalgfilter, umfasst Filterbälge, die jeweils gleichartig mit über die axiale Länge gleichem Verlauf oder unterschiedlichen Verläufen ausgeführt sind. Möglich sind sowohl eine zylindrische Form als auch eine konische Form in Bezug auf den außenliegenden als auch auf den innenliegenden Filterbalg. In einer vorteilhaften Ausführungsmöglichkeit ist der radial außenliegende Filterbalg zylinderförmig ausgebildet, wobei dessen Außendurchmesser und dessen Innendurchmesser sich über die axiale Länge nicht ändern. Anstelle dieser zylinderförmigen Ausführung kann in einer vorteilhaften Weiterbildung in Bezug auf die baulichen Erfordernisse des Filtergehäuses am Außendurchmesser eine Konizität ausgebildet sein, wodurch sich bei Montage des Filterelementes im Filtergehäuse aufgrund des stetig abnehmenden Außendurchmessers ein zusätzlicher Raum im Inneren des Filtergehäuses bildet, der die Abströmung von gereinigtem Fluid in vorteilhafter Weise beeinflusst, die Strömungsgeschwindigkeit und mit dieser sich einstellende Geräusche minimiert.

Der radial innenliegende der Filterbälge kann eine Konusform aufweisen, wobei sich der Konus zweckmäßigerweise von der Anströmseite zur Abströmseite hin verjüngt. Dadurch wird ein Strömungsraum zwischen den Filterbälgen in Form eines Ringkonus erhalten, der sich zur Abströmseite hin verbreitert und in eine Abströmöffnung ausmündet. Dies bringt unter strömungstechnischen Gesichtspunkten bezüglich der Ableitung des gereinigten Fluides Vorteile. Über die axiale Länge gesehen besitzt der Strömungsraum somit einen sich ändernden Querschnitt, wobei die Änderungsrate in axiale Richtung im Wesentlichen konstant ist. Grundsätzlich ist aber auch eine über die axiale Länge variierende Änderungsrate möglich, des Weiteren kann der Strömungsraum auch einen gleichbleibenden Querschnitt aufweisen, was dann der Fall ist, wenn die Innenseite des äußeren Filterbalges und die Außenseite des inneren Filterbalges konzentrisch zueinander verlaufen, d.h. an diesen keine Konizitäten ausgeführt sind.

Ist zum Beispiel der außenliegende der beiden Filterbälge mit einem konstanten Innendurchmesser versehen, während an der Außenmantelfläche des radial innenliegenden Filterbalges eine Konizität ausgebildet ist, entsteht ein konisch verlaufender Ringraum. Dieser Ringraum mündet abströmseitig in einer Austrittsöffnung. In diesen Ringraum kann ein Stützgerüst eingelassen werden, welches den Strömungsraum zwischen den Filterbälgen einfasst. Insbesondere bei großen, voluminösen Filtereinrichtungen, deren Filterelemente ein entsprechend höheres Gewicht aufweisen, dient dieses Stützgerät, das vorzugsweise als Kunststoffspritzgussteil gefertigt ist, zur Steigerung der Stabilität. Dieses Stützgerüst weist sowohl in axiale als auch in radiale Richtung verlaufende Rippen auf, über welche insbesondere voluminöser bauende Filterbälge auseinandergehalten werden können, so dass der zwischen diesen ausgebildete konisch verlaufende Strömungsraum hinsichtlich seiner Geometrie ein konstantes Aussehen behält. Das Stützgerüst bietet hier die geforderte mechanische Stabilität durch Abstützung. Das Stützgerüst ist bevorzugt einstückig ausgeführt.

Gemäß einer weiteren alternativen Ausführungsform der vorliegenden Erfindung weist die Filtereinrichtung innerhalb des Filtergehäuses ein Filterelement auf, das aus einer durchgehenden Filterbahn mit einer Mehrzahl paralleler Filterschichten besteht, die über gekrümmt ausgebildete Verbindungsabschnitte der Filterbahn untereinander verbunden sind. Zwischen benachbarten Filterschichten sind Abstandshalter vorgesehen. Die Zwischenräume zwischen den benachbarten Filterschichten bilden Strömungsräume für das Fluid. Die Filterschichten sind plan bzw. eben ausgebildet, dementsprechend sind auch die dazwischenliegenden Strömungsräume von den parallelen Ebenen begrenzt. Über die gekrümmt ausgebildeten Verbindungsabschnitte der Filterbahn, die an gegenüberliegenden Stirnseiten des Filterelementes wechselseitig benachbarte Strömungsräume begrenzen, wird sichergestellt, dass jeder zweite Strömungsraum an der Anströmseite geöffnet bzw. geschlossen ist. Das zu filtrierende Fluid wird axial in die offenstehenden Strömungsräume eingeleitet und muss im Strömungsraum radial die begrenzende Filterwandung durchströmen, da die gegenüberliegende axiale Stirnseite dieses Strömungsraumes an der Abströmseite von dem gekrümmten Verbindungsabschnitt verschlossen ist. Mit dem radialen Übertritt in den benachbarten Strömungsraum ist ein axiales Ableiten des Fluides aus dem Filterelement möglich.

Das Filterelement der erfindungsgemäß vorgeschlagenen Filtereinrichtung wird in vorteilhafter Weise unabhängig von seiner konstruktiven Ausgestaltung radial über eine von einem Deckel zu verschließende Gehäuseöffnung in das Filtergehäuse eingesetzt. Des Weiteren wird im Allgemeinen dem Filterelement, d.h. dem Hauptfilterelement, ein Vorfilter vorgeschaltet, das als Zyklon-Vorabscheider ausgeführt ist und zweckmäßigerweise ebenfalls in Achsrichtung durchströmt wird. Außerdem kann gemäß einer weiteren vorteilhaften Ausführungsform dem Filterelement ein Sekundär- bzw. Feinfilterelement nachgeschaltet werden, das vorteilhafterweise ebenfalls in Achsrichtung durchströmt wird.

Zur leichteren Handhabung des insbesondere bevorzugt als Zweibalgfilter ausgebildeten Hauptfilterelementes kann dieses eine zum Beispiel an der Unterseite des umlaufenden Dichtringes ausgebildete Griffmulde umfassen. Diese kann in vorteilhafter Weise so ausgebildet sein, dass eine Einhand-Montage bzw. -Demontage des Hauptfilterelementes, d.h. des Filterelementes, das als Zweifachbalgfilter ausgebildet ist, erfolgen kann. Dies bietet zum Beispiel Vorteile beim Austausch eines Filterelementes am Luftfilter einer landwirtschaftlichen Maschine, so zum Beispiel eines Mähdreschers oder eines Ackerschleppers, oder einer Baumaschine, bei der in der Regel der Bediener sich mit der anderen Hand festhält.

Des Weiteren besteht die Möglichkeit, nach Montage des insbesondere als Zweifachbalgfilter ausgebildeten Hauptfilterelementes im Filtergehäuse einen seitlichen Einschub in radiale Richtung gesehen in das Filtergehäuse einzuschieben. Seitlich am seitlichen Einschub ausgeführte Zungen laufen auf an der Innenseite des Filtergehäuses ausgebildete Rampen auf und bewirken bei vollständigem Einschub des Seiteneinschubes auf die rampenförmigen Führungen im Filtergehäuse die Erzeugung der Dichtkraft, mit der die zum Beispiel als Doppellippe ausgeführte Dichtung an das Filtergehäuse angestellt werden. Dies ist für den Benutzer auch haptisch nachvollziehbar, so zum Beispiel durch einen sich vergrößernden Schubwiderstand oder ein spürbares Einrasten der Seitenzungen des Seiteneinschubes in Rastpositionen an rampenförmigen Flächen, die an der Innenseite des Filtergehäuses vorgesehen, zum Beispiel dort angespritzt sind.

Ein weiteres vorteilhaftes Detail der erfindungsgemäß vorgeschlagenen Lösung ist darin zu erblicken, dass neben den Griffmulden im oberen Bereich des bevorzugt als Zweifachfilterbalg ausgebildeten Hauptfilterelementes an dem unteren Abdeckring in einer Winkelteilung von 90° oder 120° Ausrichte- oder Zentriernocken ausgebildet werden können. Dadurch ist sichergestellt, dass das Filterelement, insbesondere bei Einhand-Handhabung, an der Griffmulde stets in korrekter Position, d.h. parallel zur Längsachse des Filtergehäuses eingebaut und ausgerichtet ist, so dass bei Axialkraftaufbau zur Erzeugung der Abdichtung das bevorzugt als Zweifachbalgfilter ausgebildete Filterelement stets in Bezug auf die Achse des Filtergehäuses zentriert bleibt. In vorteilhafter Weise kann einer der Ausrichte- oder Zentriernocken zum Beispiel geteilt ausgebildet werden und mit einer im Gehäuse angespritzten Rippe zusammen wirken. Durch das Ausbilden einer geteilt ausgebildeten Nocke am Umfang des Hauptfilterelementes ist dessen lagerichtiges Einfügen in den Schacht des Filtergehäuses gewährleistet.

Im eingebauten Zustand verbleibt so stets ein ausreichender Abstand zwischen der Innenwand des Filtergehäuses und der Außenwand des radial außenliegend angeordneten Filterbalges bestehen, so dass die Anströmung des radial außenliegenden Filterbalges in axiale Richtung konstant bleibt, da der Abstand zwischen der Außenseite des radial außenliegenden Filterbalges und der Innenseite des Filterbalges konstant ist und die Stabilität bei mechanischer Belastung gegeben ist. Die Nocken, die an einer Abdeckung des Hauptfilterelementes ausgebildet sind und sich in radiale Richtung erstrecken, dämpfen das Hauptfilterelement im in das Filtergehäuse eingebauten Zustand, so dass dieses während des Betriebes nicht schwingt.

Bei dem erfindungsgemäß vorgeschlagenen Filterelement, insbesondere bei als Zweifachbalgfilter ausgebildetem Filterelement, können am radial innenliegenden Innenbalg eine Endscheibe aus PUR und in Bezug auf außenliegenden Balg und innenliegenden Balg ein PUR-Boden gefertigt werden und beide das Filterelement ausmachende Bälge eingeschäumt werden. Dies stellt eine sehr kostengünstig herstellbare Fertigungsvariante des erfindungsgemäß vorgeschlagenen, insbesondere als Zweifachfilter ausgebildeten Filterelementes dar. Dessen Innenraum ist an der Anströmseite durch die PUR-Endscheibe verschlossen, so dass zu filtrierendes Fluid über den ebenfalls konisch ausbildbaren Ringraum zwischen den beiden ineinandergesetzten Filterbälgen zuströmt und anschließend entweder radial nach außen abströmt oder radial in einen Innenraum auf die Reinseite überströmt. Neben einer Fertigung aus PUR kann die Endscheibe auch gemäß anderer Fertigungsverfahren hergestellt werden. So können zum Beispiel andere Vergussmaterialien eingesetzt werden oder auch angeklebte oder angeschweißte Kunststoffendscheiben sowie metallische Endscheiben, die geklebt werden, eingesetzt werden. Wird insbesondere der radial außenliegende Filterbalg in Bezug auf seinen Außendurchmesser in einer Konizität ausgebildet, so ergibt sich zwischen dem Außendurchmesser des radial außenliegenden Filterbalges und der Innenseite des Filtergehäuses ein konisch sich erweiternder Ringraum, über den das gefilterte Fluid dem Reinraum zuströmt, wobei aufgrund des erweiterten Strömungsquerschnittes die Strömungsgeschwindigkeit abnimmt und sich eventuell einstellende Geräuschentwicklungen verringert werden können, sowie eine Reduzierung der Strömungswiderstände möglich ist.

### Kurze Beschreibung der Zeichnungen

Weitere Vorteile und zweckmäßige Ausführungen sind den Ansprüchen, der Figurenbeschreibung und den Zeichnungen zu entnehmen.

Es zeigen:
- Figur 1: eine teilweise geschnittene Darstellung einer Filtereinrichtung, die insbesondere als Luftfilter für Brennkraftmaschinen eingesetzt wird und axial hintereinander einen Zyklon-Vorabscheider, ein Hauptfilterelement und ein nachgeschaltetes Feinfilterelement aufweist, wobei das Hauptfilterelement als Doppelbalgfilter mit zwei radial ineinandergesetzten Filterbälgen ausgebildet ist,
- Figur 2: das Filterelement im Halbschnitt,
- Figur 3: eine Draufsicht auf das Filterelement mit seitlich angespritzter Griffmulde,
- Figur 4: eine Darstellung der Einschäumstellen der Filterbälge in Abdeckrinnen und Abdeckscheibe,
- Figur 5: eine vergrößerte Darstellung des Bereiches der als Doppellippe ausgebildeten TPE-Dichtung und
- Figur 6: eine Explosionsdarstellung der wesentlichen Teile des Filterelementes gemäß den Figuren 1 bis 5,
- Figur 7: eine Explosionsdarstellung von Einschubelement, Hauptfilterelement und Filtergehäuse,
- Figur 8: eine perspektivische Wiedergabe eines Verriegelungsmechanismus für ein Filterelement im Filtergehäuse,
- Figur 9: einen Schnitt in Längsrichtung durch eine weitere Ausführungsvariante des Filterelementes mit Dichtung,
- Figur 10: einen Querschnitt durch das Filterelement gemäß Figur 9,
- Figur 11: eine perspektivische Ansicht der Filtereinrichtung in der zweiten Ausführungsform mit eingelegtem Filterelement,
- Figur 12: eine Explosionsdarstellung der Komponenten der weiteren, zweiten Ausführungsform des Hauptfilterelementes,
- Figur 13: eine Ansicht einer geteilt ausgebildeten Zentrier- oder Ausrichtenocke am Umfang des Hauptfilterelementes,
- Figur 14: die eine im Filtergehäuse ausgebildete Rippe umschließende, geteilt ausgebildete Zentriernocke,
- Figur 15: eine perspektivische Ansicht einer Abdeckung des Hauptfilterelementes mit drei Zentriernocken sowie einer in 12 Uhr-Position ausgebildeten, geteilt ausgebildeten Ausrichte- bzw. Zentriernocke und
- Figur 16: eine Draufsicht auf das in Figur 15 in perspektivischer Darstellung dargestellte Hauptfilterelement mit Abdeckung.

In den Figuren sind gleiche Bauteile mit gleichen Bezugszeichen versehen. Ausführungsform(en) der Erfindung

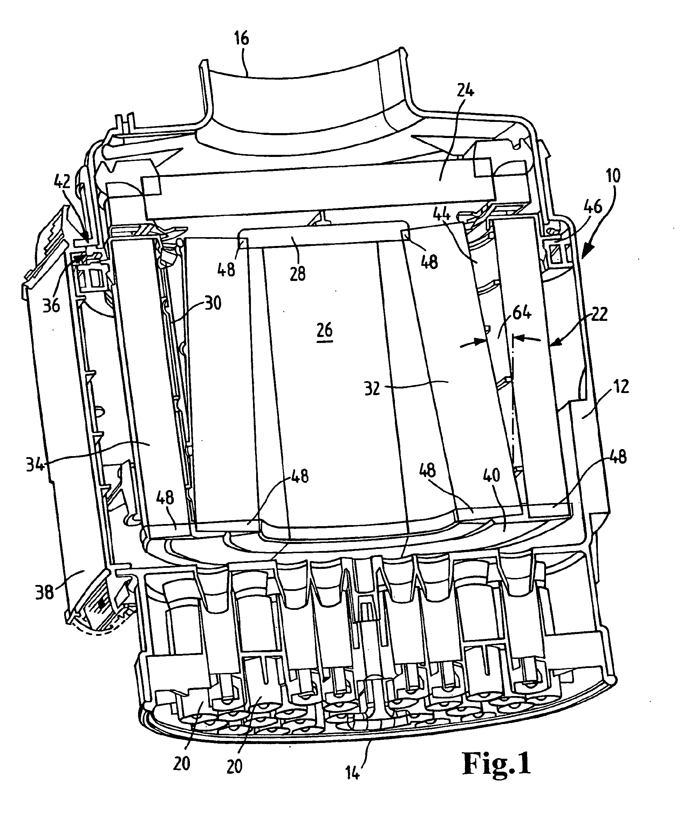

Bei der in Figur 1 dargestellten Filtereinrichtung 10 handelt es sich um einen Luftfilter für eine Brennkraftmaschine, die insbesondere in Off-Highway-Anwendungen zur Anwendung kommt, so bei landwirtschaftlichen Maschinen wie Ackerschleppern oder Mähdreschern, oder bei Baumaschinen und dergleichen. Die in Figur 1 dargestellte Filtereinrichtung kann auch in stationär eingesetzten Verbrennungskraftmaschinen, so zum Beispiel zur Energieerzeugung, eingesetzt werden sowie in großvolumigen Nutzkraftfahrzeugen.

Die in Figur 1 dargestellte Filtereinrichtung 10 umfasst ein Filtergehäuse 12, in welchem ein Hauptfilterelement 22, ein als Vorfilter ausgebildeter Zyklon-Vorabscheider 20 sowie ein dem Hauptfilterelement 22 nachgeordneter Feinfilter 24 aufgenommen sind. Aus Figur 1 geht des Weiteren hervor, dass eine Anströmseite der Filtereinrichtung 10 mit Bezugszeichen 14 gekennzeichnet ist, während deren Abströmseite durch Bezugszeichen 16 kenntlich gemacht ist. Im Bereich des Zyklon-Vorabscheiders 20 ist eine Austragöffnung 18 vorgesehen, über welche gröbere Verunreinigungen ausgetragen werden können, bevor diese in das Hauptfilterelement 22 gelangen.

Das dem Zyklon-Vorabscheider 20 in Durchströmungsrichtung des zu reinigenden Fluides gesehen nachgeschaltete Hauptfilterelement 22 umfasst einen ersten, innenliegenden Filterbalg 32 und einen diesen radial umschließenden zweiten, außenliegenden Filterbalg 34. Der radial innenliegend angeordnete, erste innere Filterbalg 32 umschließt einen Innenraum 26, der in Axialrichtung gesehen durch eine Abdeckscheibe 28 verschlossen ist. Das den Zyklon-Vorabscheider 20 passiert habende zu filternde Medium durchströmt daher den ersten, radial innenliegenden Filterbalg 32 in radiale Richtung und tritt in einen Strömungsraum 44 ein, in dem ein Stützgerüst 30 aufgenommen ist. Das Stützgerüst 30 hält den Strömungsraum 44 in seiner geometrischen Form und stützt den zweiten, radial außenliegenden Filterbalg 34 ab. Anströmseitig sind sowohl der erste, radial innenliegende Filterbalg 32 als auch der zweite, radial außenliegende Filterbalg 34 durch einen Abdeckring 40 verschlossen. Dadurch ist sichergestellt, dass das in den Innenraum 26 einströmende zu filtrierende Fluid den ersten, innenliegenden Filterbalg 32 in radiale Richtung nach außen in den Strömungsraum 44 durchströmt.

Aus der Darstellung gemäß Figur 1 geht des Weiteren hervor, dass der zweite, radial außenliegende Filterbalg 34 zylindrisch ausgebildet ist, d.h. einen in Axialrichtung gesehen konstanten Innen- als auch einen in Axialrichtung gesehen konstanten Außendurchmesser aufweist. Demgegenüber ist der erste, radial innenliegende Filterbalg 32 mit einer Konizität 64 versehen, die den konischen Strömungsraum 44 ermöglicht. Den Zyklon-Vorabscheider 20 passiert habende Luft strömt des Weiteren von der Außenmantelfläche des zweiten, radial außenliegenden Filterelementes 34 ebenfalls dem Strömungsraum 44 zu und von diesem über eine in den nachfolgenden Figuren noch dargestellte Austrittsöffnung dem Feinfilterelement 24 zu.

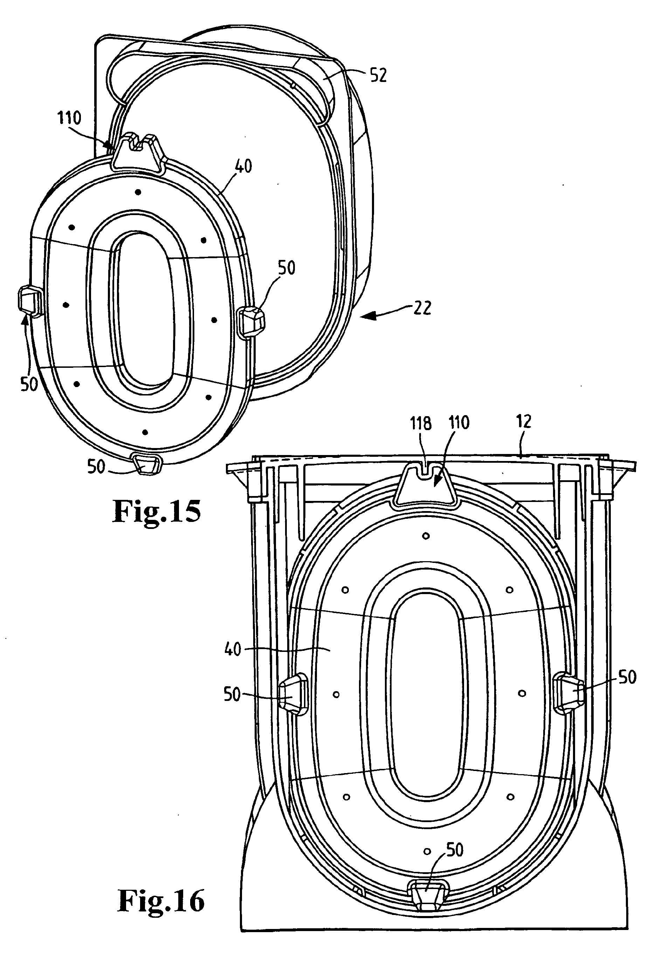

Das Hauptfilterelement 22 umfasst den Abdeckring 40, an dem einzelne Ausrichte- und Haltenocken 50 vorgesehen sind, mit denen dieser an der Innenseite des Filtergehäuses 12 der Filtereinrichtung 10 abgestützt ist (vergleiche Figuren 15 und 16). Die Rohgasseite ist gegen die Reingasseite der Filtereinrichtung 10 durch eine nachfolgend noch eingehender beschriebene Dichtung in Gestalt eines Dichtringes abgedichtet. Der Dichtring 36 kann zum Beispiel als Doppellippe profiliert sein, aus TPE gefertigt sein oder auch durch Zweikomponentenkunststoffspritzgießen (2K-Verfahren) gefertigt sein.

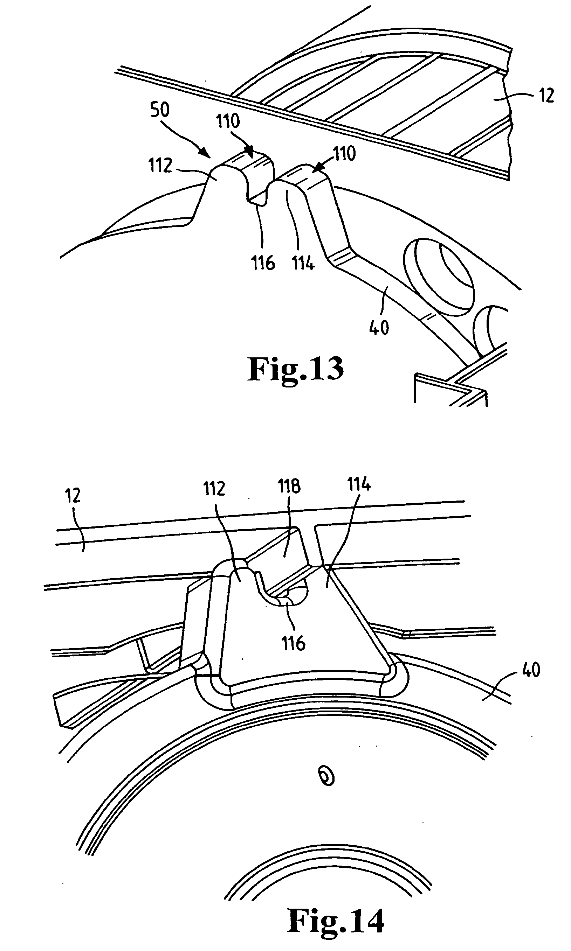

Aufgrund der Positionierung des bevorzugt als Doppelbalgfilterelement ausgebildeten Hauptfilterelementes 22 durch die Nocken 50, die am Außenumfang des Abdeckringes 40 in 120°-Teilung oder 90°-Teilung ausgebildet sind, ist die exakte Ausrichtung des Hauptfilterelementes 22 im montierten Zustand im Inneren des Filtergehäuses 12 der erfindungsgemäß vorgeschlagenen Filtereinrichtung 10 gemäß der Darstellung in Figur 1 sichergestellt. Eine der Nocken 50, welche als Zentrier- bzw. Ausrichtenocken für das Hauptfilterelement 22 dienen, kann geteilt ausgebildet sein, wie zum Beispiel in den Figuren 13 und 14 dargestellt. Die geteilt ausgebildete der Ausrichte- bzw. Zentriernocken 50 wirkt mit einer an der Innenseite des Filtergehäuses 12 ausgebildeten Rippe zusammen. Über die Nocken 50 wird das Hauptfilterelement 22 im montierten Zustand schwingungsfrei gehalten und über die geteilt ausgebildete der Nocken 50 das lagerichtige Einbauen des Hauptfilterelementes 22 im Filtergehäuse 12 sichergestellt.

Aus der Darstellung gemäß Figur 1 geht hervor, dass der Dichtring 36, hier ausgebildet als TPE-Dichtung mit Doppellippe, an einen Anschlagflansch 42 des Filtergehäuses 12 angestellt ist.

Das in Figur 1 im montierten Zustand dargestellte Hauptfilterelement 22 wird durch einen seitlich in das Filtergehäuse 12 einführbaren Einschub 38 fixiert. Dies bedeutet, dass nach der Montage des Hauptfilterelementes 22 durch eine seitliche Öffnung 66 des Filtergehäuses 12 der Einschub 38 in das Filtergehäuse 12 einfährt. Durch die Montage des Einschubelementes 38 auf im Filtergehäuse 12 verlaufenden Einschubschienen 70 wird eine in Axialrichtung wirkende Dichtkraft erzeugt, d.h. das zuvor in das Filtergehäuse 12 eingesetzte Hauptfilterelement 22 in axiale Richtung vorgespannt und an das Filtergehäuse 12 angestellt. Dadurch wird die Dichtung 36, ausgeführt als Doppellippe, die an der oberen Stirnseite des Hauptfilterelementes 22 vorgesehen ist, an ihr Pendant, d.h. den Anschlagflansch 42 des Filtergehäuses 12 angestellt und die Dichtkraft erzeugt. Über die in axiale Richtung wirkende Dichtkraft wird die Rohgasseite von der Reingasseite der erfindungsgemäß vorgeschlagenen, in Figur 1 im Halbschnitt dargestellten Filtereinrichtung 10 getrennt.

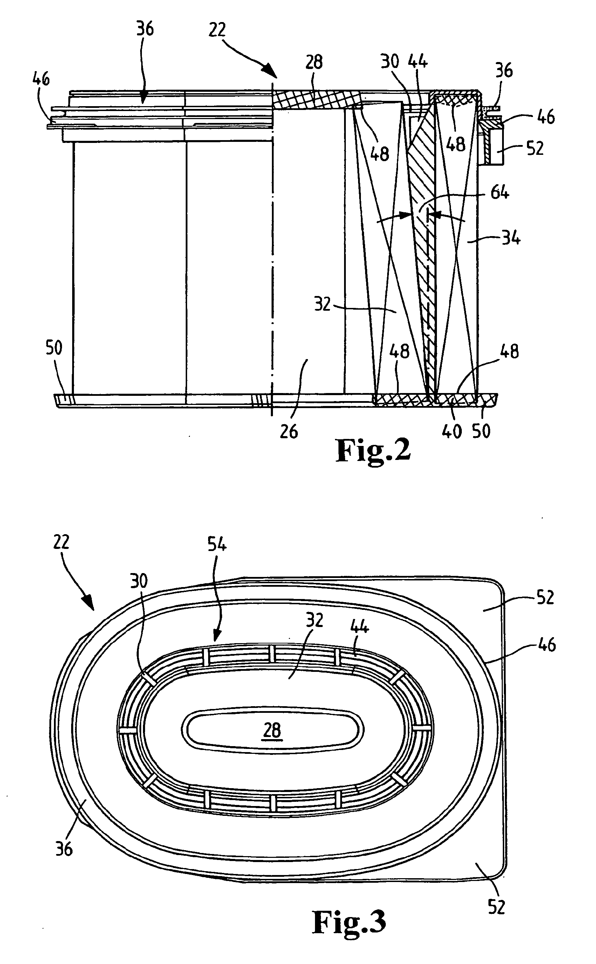

Der Darstellung gemäß Figur 2 ist ein Halbschnitt des Hauptfilterelementes der Filtereinrichtung gemäß Figur 1 zu entnehmen.

Das Hauptfilterelement 22, ausgebildet als Doppelbalgfilter, umfasst den ersten, radial innenliegenden Filterbalg 32 und den diesen radial umschließenden zweiten, außenliegenden Filterbalg 34. Beide Filterbalge 32, 34 werden im Wesentlichen in radialer Richtung von innen nach außen bzw. von außen nach innen durchströmt. In axialer Richtung ist die Anströmung der Stirnseiten von der Anströmseite 14 her durch den Abdeckring 40 unterbunden. Wie aus der Halbschnittdarstellung gemäß Figur 2 hervorgeht, umfasst der Abdeckring 40 seitlich hervorspringende Halte- bzw. Zentriernocken 50. Diese können bei der Herstellung des Abdeckringes 40 sehr einfach hergestellt werden. Über diese am Umfang des Abdeckringes 40 in 90°- oder 120°- oder in einer davon abweichenden Teilung ausgebildeten Aufrichte- und Haltenocken 40 wird das Hauptfilterelement 22 im Filtergehäuse 12 der erfindungsgemäß vorgeschlagenen Filtereinrichtung 10 ausgerichtet. Der Abdeckring 40 entspricht dem Boden 92 des Hauptfilterelementes 22.

Aus der Darstellung gemäß Figur 2 geht des Weiteren hervor, dass sich an der Oberseite des Hauptfilterelementes 22 ein umlaufender, ringförmig ausgebildeter Absatz 46 befindet, auf dem eine Dichtung 36 aufgenommen ist, die in dieser Ausführungsvariante als Doppellippe ausgeführt ist. Die untere Einzellippe der Dichtung 36 stützt sich auf dem ringförmig umlaufenden Absatz 46 an der Oberseite des Hauptfilterelementes 22 ab.

Der erste, radial innenliegende Filterbalg 32 begrenzt den Innenraum 26, der abströmseitig durch die eingeschäumte oder eingespritzte Abdeckscheibe 28 verschlossen ist. Dadurch wird dem axial einströmenden Fluid die radiale Durchströmung des ersten, radial innenliegenden Filterbalgs 32 in radiale Richtung aufgeprägt. Nach Passage des ersten, radial innenliegenden Filterbalges 32, strömt das Fluid in den Strömungsraum 44 ein, dessen keilförmige Kontur durch das Stützgerüst 30 erzeugt wird, welches zwischen der Innenseite des zweiten, außenliegenden Filterbalges 34 und der Außenseite des hier konisch ausgebildeten ersten, radial innenliegenden Filterbalges 32 angeordnet ist und die Kontur des Strömungsraumes 44 bestimmt. Mit Position 48 sind die Einschäumstellen bezeichnet, an welchen die axialen Stirnseiten sowohl des ersten, radial innenliegenden Filterbalges 32 als auch des zweiten, radial außenliegenden Filterbalges 34 mit der Abdeckscheibe 28 bzw. dem Abdeckring 40 verbunden sind. Die Ausbildung von Einschäumungen 48 zum Beispiel aus Kunststoffmaterial wie PUR, oder dergleichen, erlaubt eine definierte Vorgabe der Durchströmungsrichtung des Hauptfilterelementes 22, hier ausgebildet als Doppelfilterbalg, sowie eine sehr leichte und kostengünstige Herstellmöglichkeit desselben.

Figur 3 zeigt eine Draufsicht des in Figur 2 im Halbschnitt dargestellten Hauptfilterelementes.

Aus der Darstellung gemäß Figur 3 geht hervor, dass - wie bereits in Figur 2 angedeutet - an der Unterseite des ringförmig umlaufenden Absatzes 46 eine Griffmulde 52 oder ein Griffstück 52 angespritzt ist. Dies erlaubt ein Einhand-Handling des erfindungsgemäß vorgeschlagenen Hauptfilterelementes 22. Ist ein Maschinenbediener gezwungen, kurzfristig ein Luftfilterelement einer Verbrennungskraftmaschine an einem Ackerschlepper, einem Mähdrescher oder einer Baumaschine oder dergleichen auszutauschen, so ist dies in der Regel mit einem Hinaufklettern an die Verbrennungskraftmaschine, insbesondere von deren Ansaugtrakt, verbunden. Der Maschinenbediener ist gezwungen, sich mit einer Hand festzuhalten und hat nur eine Hand zur Verfügung, um an der Filtereinrichtung 10 das Hauptfilterelement 22, welches dem Verschleiß unterliegt, einhändig auszuwechseln. Das einhändige Auswechseln wird durch die seitlich angespritzte, sehr gut zugängliche Griffmulde 52 bzw. das seitlich angespritzte Griffstück 52 erheblich vereinfacht. Wird nach Auswechseln eines verbrauchten Hauptfilterelementes 22 der seitliche Einschub 38 wieder eingeschoben, so wird allein durch die Einschubbewegung die axiale Vorspannkraft erzeugt, welche die Dichtwirkung schließlich zwischen der als Doppellippe ausgeführten Dichtung 36 und dem Filtergehäuse 12 bzw. dem dort vorgesehenen Anschlagflansch 42 erzeugt.

Der Darstellung gemäß Figur 3 ist überdies zu entnehmen, dass die Dichtung 36 ununterbrochen auf dem ringförmigen Absatz 46 umläuft und an der in Figur 3 dargestellten Abströmseite des Hauptfilterelementes 22 eine Abströmöffnung 54 durch das den Strömungsraum 44 definierende Stützgerüst 30 vorgegeben ist.

Über die ovale Abströmöffnung 54 strömt gereinigtes Fluid dem in Figur 1 dargestellten Feinfilterelement 24 zu.

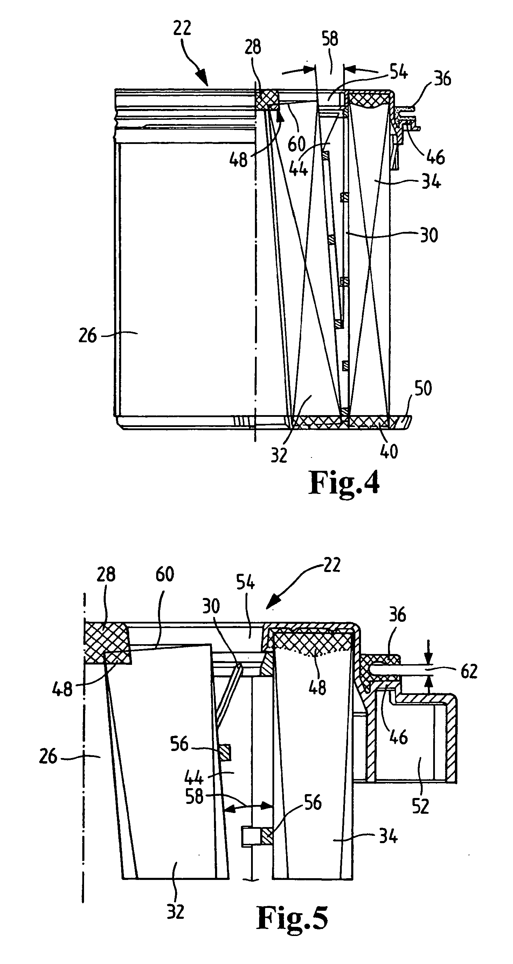

Figur 4 zeigt das Stützgerüst zwischen den Filterbälgen des als Doppelfilterbalg ausgebildeten Hauptfilterelementes in größerer Detaillierung.

Wie Figur 4 zu entnehmen ist, umfasst das Stützgerüst 30, welches den konischen Strömungsraum 44 definiert, eine senkrecht zur Zeichenebene in Umfangsrichtung verlaufende Rippenstruktur 56. In Axialrichtung von der Anströmseite 14 her gesehen, erweitert sich der konisch ausgebildete Strömungsraum 44 in Richtung zur Abströmseite 16 hin. Mit Bezugszeichen 54 ist eine Abströmöffnung des Strömungsraumes 44 bezeichnet. Sowohl der erste, radial innenliegende Filterbalg 32 als auch der radial außenliegende, zweite Filterbalg 34 werden im Wesentlichen in radialer Richtung durchströmt. Wie aus der Darstellung gemäß Figur 4 hervorgeht, sind die Stirnseiten der beiden Filterbälge 32, 34 durch Einschäumungen 48 entweder mit der Abdeckscheibe 28 oder mit dem Abdeckring 40 verbunden, an dessen Außenumfang die Ausrichte- und Haltenocken 50 in beliebiger Anzahl angespritzt sein können. Figur 4 zeigt des Weiteren, dass im Vergleich zum zylindrisch ausgebildeten zweiten, radial außenliegenden Filterbalg 34 der erste, radial innenliegende Filterbalg 32 in einer Konizität 64 ausgeführt ist, entsprechend der Konizität des Stützgerüstes 30. Die Konizität des Strömungsraumes 44 ist durch Bezugszeichen 58 angedeutet.

Der Innenraum 26 ist durch den Innendurchmesser des ersten, radial innenliegenden Filterbalges 32 begrenzt.

Figur 5 zeigt in vergrößertem Maßstab den oberen Bereich des in den Figuren 2, 3 und 4 jeweils im Halbschnitt dargestellten Hauptfilterelementes.

Wie Figur 5 zeigt, befindet sich oberhalb des ringförmig ausgebildeten Absatzes 46 die als Doppellippe ausgebildete Dichtung 36. Die beiden Einzellippen der als Doppellippe ausgebildeten Dichtung 36 sind im entspannten Zustand der Dichtung 36 um einen Abstand 62 voneinander beabstandet. An der unteren Einzellippe befindet sich ein dornförmiger Fortsatz, der in eine entsprechend zu seiner Geometrie komplementär geformte umlaufende Ausnehmung des ringförmig ausgebildeten Absatzes 46 eingreift. Unterhalb des ringförmig verlaufenden Absatzes 46 befindet sich das Griffstück 52, mit dem die einhändige Handhabung des Hauptfilterelementes 22 erfolgt. In der Darstellung gemäß Figur 5, die im Vergleich zu den Darstellungen gemäß der Figuren 2, 3 und 4 in vergrößertem Maßstab wiedergegeben ist, sind die Einschäumungen 48 der abströmseitig liegenden Stirnseiten der Filterbälge 32, 34 zu erkennen, ferner die Konizität 58 des Strömungsraumes 44, in dem sich das Stützgerüst 30 befindet. Eine in Umfangsrichtung verlaufende Rippenstruktur des Stützgerüsts 30 des Strömungsraumes 44 ist durch Bezugszeichen 56 kenntlich gemacht. Das den ersten radial innenliegenden Filterbalg 32 von innen nach außen durchströmende Fluid strömt in den Strömungsraum 44 ein und von diesem über die Abströmöffnung 54 aus. Im Gegensatz dazu wird der zweite, radial außenliegende Filterbalg 32 von außen nach innen von dem zu reinigenden Fluid durchströmt und verlässt den konisch ausgebildeten Strömungsraum 44 ebenfalls an der Abströmöffnung 54.

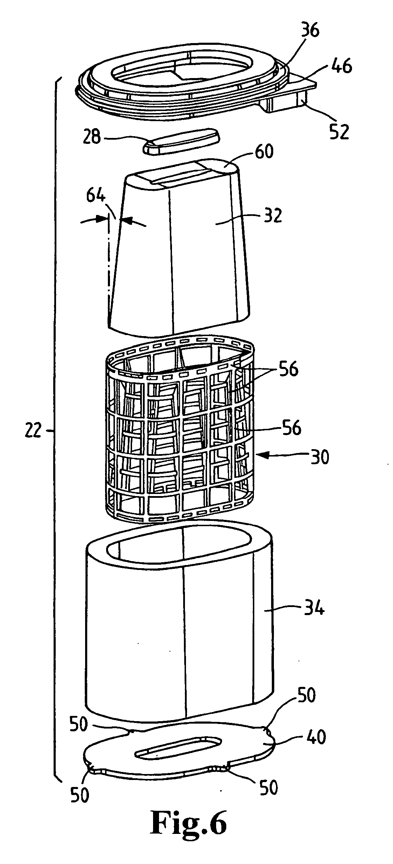

Figur 6 ist eine Explosionsdarstellung der wesentlichen Komponenten der ersten Ausführungsform des Hauptfilterelementes der erfindungsgemäß vorgeschlagenen Filtereinrichtung zu entnehmen.

Aus der in Figur 6 dargestellten Explosionsdarstellung der Komponenten geht hervor, dass sich eine oder mehrere Griffmulden 52 seitlich unterhalb der als Doppellippe ausgebildeten Dichtung 36 befinden. Diese befindet sich auf dem bereits mehrfach erwähnten ringförmig verlaufenden Absatz 46. Durch Bezugszeichen 28 ist in der Explosionsdarstellung gemäß Figur 6 die den Innenraum 26 verschließende Abdeckscheibe kenntlich gemacht. In Figur 6 ist durch Bezugszeichen 60 eine Stirnkantenverleimung angedeutet, mit der die zum Beispiel in Sternform gefalteten Filterbälge ab- und anströmseitig versehen sind.

Aus der Explosionsdarstellung gemäß Figur 6 ergibt sich überdies, dass der erste, radial innenliegende Filterbalg 32 in der Konizität 64 ausgebildet ist, die zur Konizität des Stützgerüstes 30 korrespondiert. Das Stützgerüst 30 umfasst gitterförmig strukturierte, in Axial- und in Umfangsrichtung verlaufende Rippen 56.

Im Gegensatz zu der Kontur des ersten radial innenliegenden Filterbalges 32 und dessen mit einer Konizität 64 versehener Außenmantelfläche ist der zweite, radial außenliegende Filterbalg 34 zylindrisch ausgebildet. Auch dessen Außendurchmesser könnte mit einer Konizität versehen sein, um zum Beispiel beengten Bauraumerfordernissen Rechnung zu tragen und eine gleichmäßigere Anströmung von radialer Richtung her zu ermöglichen.

Schließlich geht aus der Darstellung gemäß Figur 6 noch hervor, dass die Abdeckscheibe 40 am Außenumfang eine Anzahl von Ausrichte- und Haltenocken 50 aufweist. Diese sind bereits vorstehend im Zusammenhang mit den Figuren 1 bis 5 beschrieben.

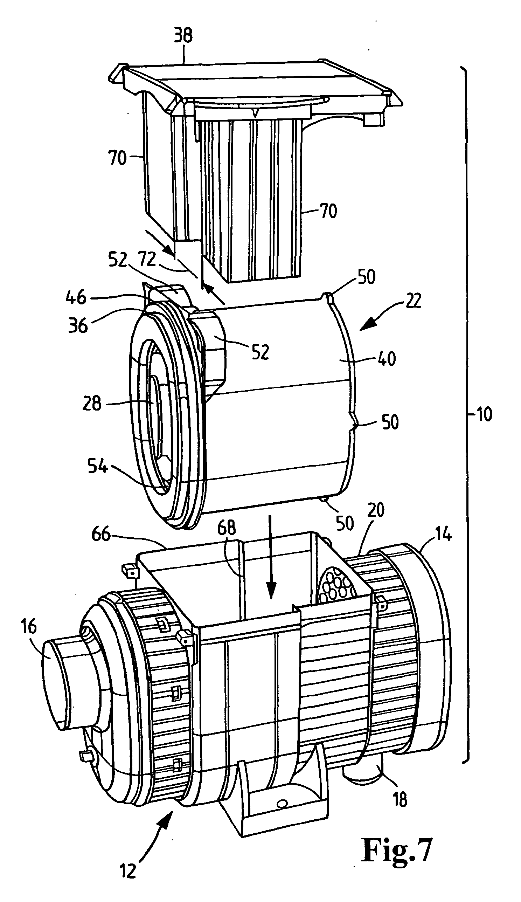

Figur 7 zeigt eine Explosionsdarstellung der Komponenten Einschubelement, Filterelement und Filtergehäuse der erfindungsgemäß vorgeschlagenen Filtereinrichtung.

Wie Figur 7 entnommen werden kann, weist das Filtergehäuse 12 eine durch Bezugszeichen 66 kenntlich gemachte seitliche Öffnung auf. Die Öffnung 66 ist seitlich am Filtergehäuse 12 vorgesehen. Das Filtergehäuse 12 wird insbesondere als Spritzgussbauteil aus Kunststoff hergestellt. In der Öffnung 66 befindet sich ein Führungsabsatz 68, der sich im Wesentlichen senkrecht zur Längsachse der seitlichen Öffnung 66 erstreckt und als Führung für den durch Bezugszeichen 38 identifizierten Seiteneinschub dient. Der Seiteneinschub 38 wiederum umfasst gemäß der Darstellung in Figur 7 Einschubschienen 70, deren untere Seite beim Einführen des Seiteneinschubes 38 in die Öffnung 66 des Filtergehäuses 12 auf dem Führungsabsatz 68 verschiebbar ist.

Zunächst wird bei der Montage bzw. der Demontage des verbrauchten Hauptfilterelementes 22 dieses an seinen Griffmulden bzw. Griffstücken 52 ergriffen und aus der seitlichen Öffnung 66 herausgezogen. Anschließend wird ein neues, unverbrauchtes Hauptfilterelement 22 in die seitliche Öffnung 66 eingeschoben. Nachdem dieses in der seitlichen Öffnung 66 eingeschoben ist, ist das Hauptfilterelement 22 zunächst durch die an dem Abdeckring 40 in einer 90°- oder 120°-Teilung vorgesehenen Nocken 50 im Filtergehäuse 12 zentriert und ausgerichtet. Zur Erzeugung der in axiale Richtung des Hauptfilterelementes 22 wirkenden Dichtkraft wird der Seiteneinschub 38 in die seitliche Öffnung 66 eingeschoben. An dem Seiteneinschub 38 sind Einschubschienen 70 ausgebildet, einen Freiraum 72 in Bezug aufeinander bildend, die beim Einschieben des Seiteneinschubes 38 in die seitliche Öffnung 66 das durch dort vormontierte Hauptfilterelement 22 untergreifen. Beim Einschieben des Seiteneinschubes 38 in die seitliche Öffnung 66 des Filtergehäuses 12 untergreifen die in einer sachten Neigung ausgebildeten Oberseiten der Einschubschienen 70 das vormontierte Hauptfilterelement 22 und stellen dieses bei vollständig in die seitliche Öffnung 66 eingeschobenem Seiteneinschub 38 an die das Feinfilterelement 24 aufnehmende Gehäuseseite des Filtergehäuses 12 an. Dadurch wird die am Hauptfilterelement 22 ausgebildete Dichtung 36 an die an der entsprechenden Seite am Filtergehäuse 12 ausgebildete Dichtfläche angestellt. Ist der Seiteneinschub 38 mit seinen Einschubschienen 70 vollständig in die seitliche Öffnung 66 eingeführt, so wird das Hauptfilterelement 22 in axiale Richtung mit seiner Dichtung 36 gegen eine korrespondierende Dichtfläche des Filtergehäuses 12, so zum Beispiel an einen Anschlagflansch 42 angestellt, und auf diesem Wege die in axiale Richtung wirkende Dichtkraft erzeugt.

Wenngleich in der Darstellung gemäß Figur 7 am Hauptfilterelement 22 ausgebildet, so kann die bevorzugt als Doppellippe ausgebildete Dichtung, d.h. die Dichtung 36, auch in kinematischer Umkehr nicht am Hauptfilterelement 22, sondern an der korrespondierenden Dichtfläche einer Seitenfläche der seitlichen Öffnung 66 des Filtergehäuses 12 ausgebildet sein.

Die Führung des Seiteneinschubes 38 im Filtergehäuse 12 erfolgt entlang der Führungsabsätze 68, die an Seitenflächen, die die Öffnung 66 im Filtergehäuse 12 begrenzen, ausgeführt sind.

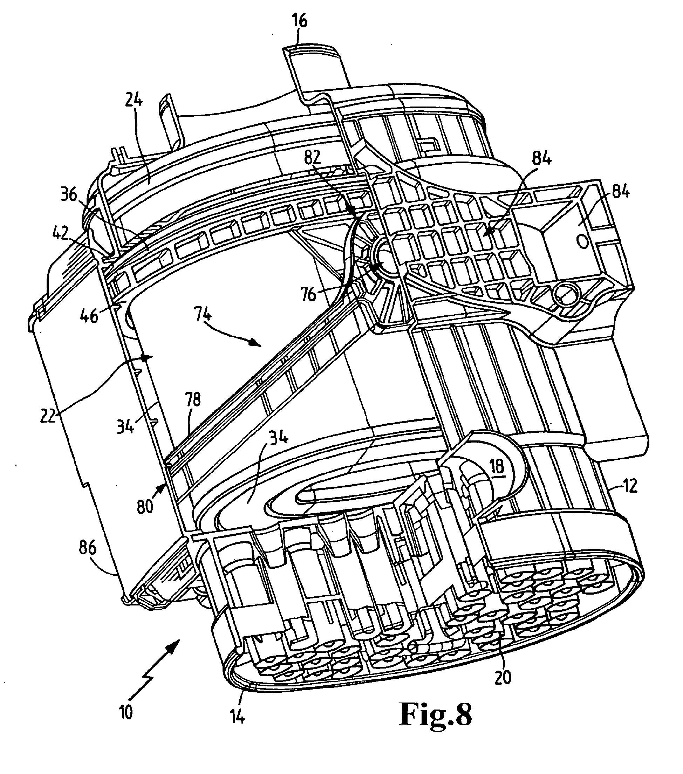

Der Darstellung gemäß Figur 8 ist eine Ausführungsvariante einer größerbauenden erfindungsgemäß vorgeschlagenen Filtereinrichtung zu entnehmen.

Um die bei der Überführung einer Verriegelung 74 von ihrer Entriegelungsposition in ihre Verriegelungsposition 80 auftretenden Kräfte aufzunehmen, ist am Filtergehäuse 12 im Bereich der Gelenke 76 eine Verstärkungsstruktur 84 angespritzt. Die Montageöffnung, d.h. der Gehäuseschacht 66 im Filtergehäuse 12, ist durch einen in Figur 8 nur teilweise dargestellten Deckel 86 verschlossen.

Der Vollständigkeit halber sei erwähnt, dass die in Figur 8 in perspektivischer Darstellung wiedergegebene Filtereinrichtung 10 auf der Anströmseite 14 den Zyklon-Vorabscheider 20 und auf der Abströmseite 16 das Feinfilterelement 24 (hier nicht im Schnitt dargestellt) aufweist. Die Verriegelung 74 wird mittels eines Griffstücks 78 betätigt.

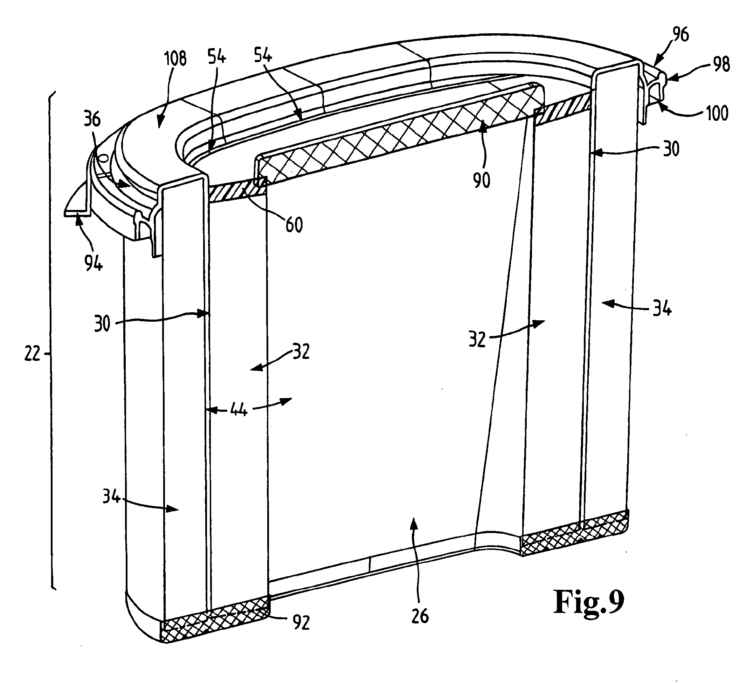

Figur 9 zeigt eine weitere, zweite Ausführungsmöglichkeit der erfindungsgemäß vorgeschlagenen Filtereinrichtung, insbesondere des Hauptfilterelementes.

Aus dem Längsschnitt, der in Figur 9 dargestellt ist, geht hervor, dass die Dichtung 36, die die axiale Abdichtung erzeugt, an der Oberseite des Hauptfilterelementes 22 als Zweikomponenten-Kunststoffspritzgussteil ausgebildet ist. Während die ringförmig ausgebildete Dichtung 36, an der aus einem ersten Kunststoffmaterial 96 Nocken 94 angespritzt sind, aus dem besagten ersten Kunststoffmaterial gespritzt ist, ist ein weicheres, gute Elastizitätseigenschaften aufweisendes, zweites Kunststoffmaterial 98, eine Ausnehmung 100 begrenzend, in das erste Kunststoffmaterial 96 eingespritzt. Das weichere, zweite Kunststoffmaterial 98 begrenzt eine Ausnehmung 100, die nach unten geöffnet ist.

Im in Figur 9 dargestellten Längsschnitt durch das Hauptfilterelement 22 ist erkennbar, dass der erste, radial innenliegende Filterbalg 32, der den Innenraum 26 umschließt, durch eine Endscheibe 90 (PUR) verschlossen ist. Die Endscheibe 90 ist bevorzugt in eine axiale Stirnseite des ersten, innenliegenden Filterbalges 32 eingeschäumt. Die der Endscheibe 90 auf der Anströmseite gegenüberliegende Öffnung ist durch einen Boden 92 begrenzt, der eine Einlassöffnung zum Innenraum 26 des Hauptfilterelementes 22 freigibt. Durch diese Öffnung strömt zu reinigendes Fluid in den Innenraum 26 ein. Aufgrund der Endscheibe 90 wird dem zu reinigenden Fluid die radiale Durchströmung des ersten, radial innenliegend angeordneten Filterbalges 32 aufgezwungen.

Die axialen Stirnseiten, die bevorzugt eine Stirnkantenverleimung 60 aufweisen, werden auf der Einströmseite durch den Boden 92 verschlossen, während die axiale Stirnseite des zweiten, radial außenliegenden Filterbalges 34 durch eine ringförmige Abdeckung 108 verschlossen ist. Durch diese Maßnahme wird eine radiale Durchströmung von der Außenseite zur Innenseite in Bezug auf den zweiten, radial außenliegenden Filterbalg 34 erzwungen, so dass das zu reinigende Fluid in radiale Richtung einerseits aus dem ersten, innenliegenden Filterbalg 32 in den Strömungsraum 44 austritt und andererseits an der Innenseite des zweiten, radial außenliegenden Filterbalges 34 in diesen Strömungsraum 44 eintritt. Dessen Abströmöffnung ist in der Darstellung gemäß Figur 9 durch Bezugszeichen 54 kenntlich gemacht.

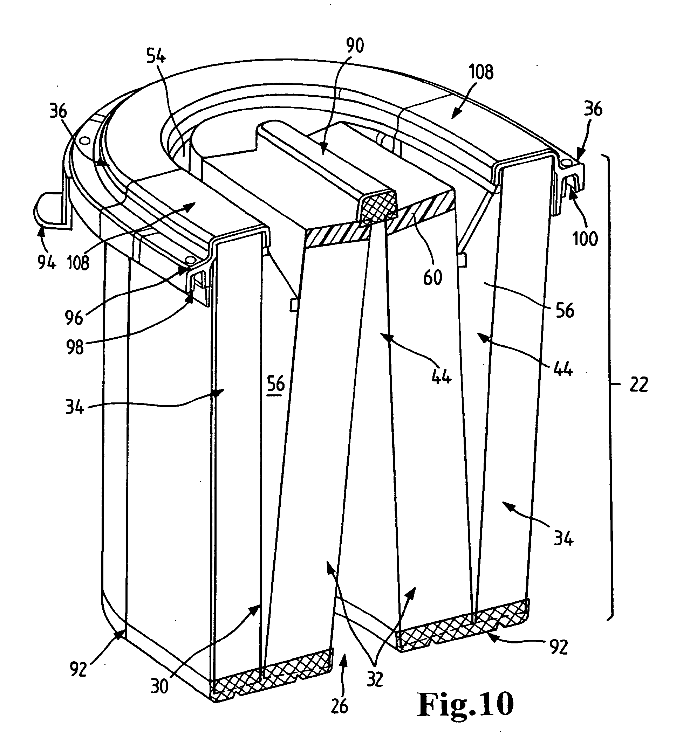

Der Darstellung gemäß Figur 10 ist ein Querschnitt durch das in Figur 9 im Querschnitt dargestellte Hauptfilterelement gemäß der zweiten Ausführungsform zu entnehmen.

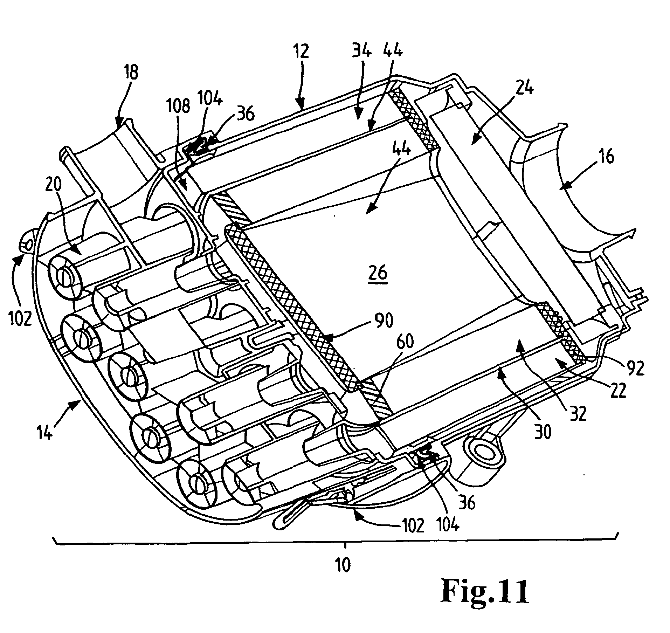

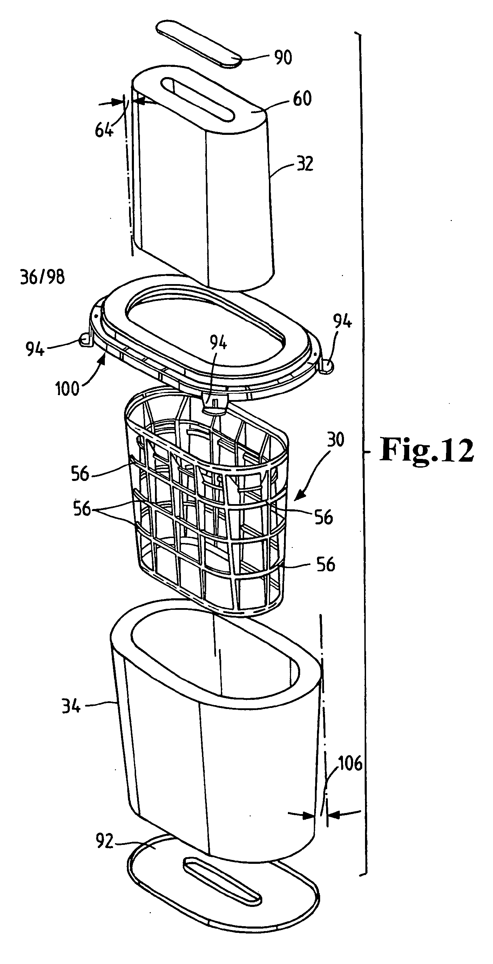

Figur 10 zeigt, dass die umlaufende Dichtung 36, aus dem ersten, härteren und steiferen Kunststoffmaterial 96 gefertigt, die Ausnehmung 100 aufweist, die durch das zweite, hervorragende Elastizitätseigenschaften aufweisende Kunststoffmaterial 98 begrenzt ist. Die Ausnehmung 100 wirkt mit einer ringförmig am Filtergehäuse 2 ausgebildeten umlaufenden Nase 104 zusammen, vergleiche Darstellung gemäß Figur 11. Figur 10 zeigt des Weiteren, dass der Innenraum 26, der durch die Innenseite des ersten, radial innenliegenden Filterbalges 32 begrenzt ist, durch die Endscheibe 90 in axiale Richtung auf der Abströmseite 16 verschlossen ist. Aus der Darstellung gemäß Figur 10 geht des Weiteren hervor, dass der Außendurchmesser des ersten, radial innenliegenden Filterbalges eine Konizität 64 aufweist, die durch das zwischen dem ersten, radial innenliegenden Filterbalg 32 und dem zweiten, radial außenliegenden Filterbalg 34 eingeschobene Stützgerüst 30 aufrechterhalten wird. Das Stützgerüst 30, welches die Konizität des Strömungsraumes 44 aufrechterhält, bildet am abströmseitigen Ende des Hauptfilterelementes 22 die Abströmöffnung 54. Im Gegensatz zum ersten, radial innenliegend angeordneten Filterbalg 32 ist der zweite, radial außenliegend angeordnete Filterbalg 34 zylindrisch ausgeformt, könnte jedoch ebenfalls an seinem Außendurchmesser eine Konizität 106 aufweisen. Diese Ausführungsmöglichkeit der Außenkontur des zweiten, radial außenliegenden Filterbalges 34 ist in der Explosionsdarstellung gemäß Figur 12 dargestellt.

Aus der Darstellung gemäß Figur 10 geht des Weiteren hervor, dass die Anströmseite 14 des Hauptfilterelementes 22 gemäß der Darstellung in Figur 10 durch den Boden 92 verschlossen ist. Sowohl auf der Anströmseite 14 im Bereich des Bodens 92, als auch auf der Abströmseite 16 im Bereich der Abdeckscheibe 90 weisen die axialen Stirnseiten sowohl des ersten, radial innenliegenden Filterbalges 32 als auch des zweiten, radial außenliegenden Filterbalges 34 des Hauptfilterelementes 22 die Stirnkantenverleimung 60 auf. Außenliegend angespritzte Nocken 94 dienen als Verdrehsicherung für das Hauptfilterelement 22 im Filtergehäuse 12.

Der Darstellung gemäß Figur 11 ist die perspektivische Darstellung eines Längsschnittes durch die erfindungsgemäß vorgeschlagene Filtereinrichtung 10 gemäß der zweiten Ausführungsform zu entnehmen.

Figur 11 zeigt, dass das Filtergehäuse 12 der Filtereinrichtung 10 an der Anströmseite 14 den Zyklon-Vorabscheider 20, in Strömungsrichtung gesehen dahinterliegend das Hauptfilterelement 22 und axial hinter diesem liegend, das Feinfilterelement 24 aufweist. Die Abströmseite des Filtergehäuses 12 ist durch Bezugszeichen 16 kenntlich gemacht.

Im Unterschied zur ersten Ausführungsform der erfindungsgemäß vorgeschlagenen Filtereinrichtung 10, wird bei dieser Ausführungsvariante die im Wesentlichen in Axialrichtung gerichtete Dichtkraft nicht durch einen Seiteneinschub 38, vergleiche Darstellung gemäß Figur 7, erzeugt, sondern der Zyklon-Vorabscheider 20 wird auf das Filtergehäuse 12 durch Verschlüsse 102 befestigt. Beim Fügen vom Filtergehäuse 12 mit dem Zyklon-Vorabscheider 20 erfolgt ein Einschieben der umlaufend am Filtergehäuse 12 ausgebildeten Nase 104 in die Ausnehmung 100, die durch das elastische Eigenschaften aufweisende, zweite Kunststoffmaterial 98 begrenzt ist. Die erforderliche Axialkraft wird durch die Verschlüsse 102 erzeugt, so dass, wie in Figur 11 dargestellt, im gefügten Zustand vom Zyklon-Vorabscheider 20 und Filtergehäuse 12, eine Abdichtung der Rohgasseite von der Reingasseite erfolgt ist.

Da das zweite Kunststoffmaterial 98 vom ersten Kunststoffmaterial 96, welches wesentlich härter und steifer ausgelegt ist, umschlossen ist, kann das zweite, die Ausnehmung 100 begrenzende Kunststoffmaterial 98 nicht seitlich verfließen, so dass beim Einschieben der umlaufend am Filtergehäuse 12 ausgebildeten Nase 104 in die Ausnehmung 100, eine zuverlässige Abdichtung gewährleistet wird, die auch ein öfteres Öffnen und Verschließen schadlos übersteht, da das zweite Kunststoffmaterial 98 umkapselt ist und auch nach mehrmaligem Öffnen und Verschließen nicht verfließt.

Der Vollständigkeit halber sei erwähnt, dass das in Figur 11 im montierten Zustand dargestellte Hauptfilterelement 22 in der Schnittdarstellung gemäß Figur 11 den ersten, radial innenliegenden Filterbalg 32 sowie den zweiten, radial außenliegenden Filterbalg 34 umfasst. Wie im Zusammenhang mit den Figuren 9 und 10 bereits erwähnt, ist der zweite, radial außenliegende Filterbalg 34 zylindrisch ausgebildet, während der von diesem umschlossene innenliegende, erste Filterbalg 32 an seinem Außendurchmesser und seinem Innendurchmesser eine Konizität aufweisen kann. Die Konizität 64 des Außendurchmessers des ersten, radial innenliegenden Filterbalges 32 ergibt in Zusammenwirkung mit dem ebenfalls eine Konizität aufweisenden Stützgerüst 30 die Kontur des Strömungsraums 44, der sich in Richtung der Abströmseite 16 hinsichtlich seines Querschnitts kontinuierlich verengt.

Der Darstellung gemäß Figur 11 ist des Weiteren zu entnehmen, dass der dort dargestellte Zyklon-Vorabscheider 20 die Austragsöffnung 18 aufweist, über welche gröbere Partikel der zu reinigenden Fluidströmung direkt ausgesondert werden können und gar nicht erst in das Hauptfilterelement 22 gelangen. Aufgrund der Endscheibe 90 und der Abdeckung 108 erfolgt eine Anströmung des zweiten, radial außenliegenden Filterbalges 34 von der Radialseite her, d.h. in der radialen Richtung über die durch die Innenseite des Filtergehäuses 12 und die Außenmantelfläche des zweiten, außenliegenden Filterbalges 34 vorgegebene Richtung, da die axiale Stirnseite des zweiten, radial außenliegenden Filterbalges 34 durch die Abdeckung 108 verschlossen ist. Der erste, radial innenliegende Filterbalg 32 wird an der Stirnkantenverleimung 60 axial angeströmt.

Der erste, radial innenliegende Filterbalg 32 wird über die die Stirnkantenverleimung 60 aufweisende Axialstirnseite angeströmt, und das gereinigte Fluid strömt in radiale Richtung nach innen in den Innenraum 26 ein und von dort dem dem Hauptfilterelement 22 nachgeschalteten Feinfilterelement 24 zu.

Der Darstellung gemäß Figur 12 ist eine Explosionsdarstellung des Hauptfilterelementes gemäß der zweiten Ausführungsvariante, vergleiche Figuren 9 bis 11, zu entnehmen.

Aus der in Figur 12 dargestellten Explosionsdarstellung geht hervor, dass das Hauptfilterelement 22 den die Konizität 64 aufweisenden ersten, radial innenliegenden Filterbalg 32 sowie gegebenenfalls den eine ebenfalls außen ausgebildete Konizität 106 aufweisenden zweiten, radial außenliegenden Filterbalg 34 umfasst. Beide Filterbälge 32, 34 des Hauptfilterelementes 22 umfassen an ihren axialen Stirnseiten die Stirnkantenverleimung 60. Der erste, radial innenliegende Filterbalg 32 ist anströmseitig durch die Endscheibe 90 (PUR) verschlossen, während abströmseitig die axialen Stirnseiten sowohl des ersten, radial innenliegenden Filterbalges 32 als auch des zweiten, radial außenliegenden Filterbalges 34, jeweils die Stirnkantenverleimung 60 aufweisend, durch den Boden 92 verschlossen sind.

Die in Figur 12 dargestellte Dichtung 36 ist als Zweikomponenten-Kunststoffdichtung ausgebildet. Die Dichtung 36 ist aus dem ersten Kunststoffmaterial 96 mit härteren, steiferen Eigenschaften gespritzt, während die in der Explosionsdarstellung gemäß Figur 11 nicht dargestellte Ausnehmung 100 durch das vom ersten Kunststoffmaterial 96 umschlossene zweite, höhere Elastizitätseigenschaften aufweisende Kunststoffmaterial 98 begrenzt ist.

Zwischen dem ersten, radial innenliegenden Filterbalg 32 und dem zweiten, radial außenliegenden Filterbalg 34 befindet sich das Stützgerüst 30, welches gemäß der Explosionsdarstellung in Figur 12 eine Vielzahl von in radiale und in Umfangsrichtung verlaufende Rippen 56 aufweist.

Der zweite, radial außenliegende Filterbalg 34 kann bezüglich seines Außendurchmessers die Konizität 106 aufweisen, wie in der Explosionsdarstellung gemäß Figur 12 angedeutet. In Zusammenspiel mit dem das Hauptfilterelement 22 umgebenden Filtergehäuse 12 kann durch die Konizität 106 am Außendurchmesser des zweiten, radial außenliegenden Filerbalges 34 des Hauptfilterelementes 22 erreicht werden, dass ein sich in Abströmrichtung erstreckender, erweiternder Strömungsquerschnitt sich einstellt, indem die Strömungsgeschwindigkeit abnimmt und demzufolge eine Geräuschentwicklung minimiert oder zumindest begrenzt werden kann.

In einer alternativen Ausführungsform kann das Hauptfilterelement 22, welches im Filtergehäuse 12 aufgenommen wird und den ersten sowie den zweiten Filterbalg 32 bzw. 34 umfasst, auch dadurch stabilisiert werden, dass Falten durch einen umlaufenden Faden, der auf die Spitzen der Falten aufgeklebt wird, miteinander verbunden werden.

Der Darstellung gemäß Figur 13 ist eine geteilt ausgebildete Nocke am Umfang des Abdeckringes des Hauptfilterelementes 22 zu entnehmen. Wie die Darstellung gemäß Figur 13 zeigt, ist eine geteilte Nocke 110 mit einer Schlitzung 116 versehen. Dadurch umfasst die geteilte Nocke 110 eine erste Schulter 112 sowie eine zweite Schulter 114, die sich in Umfangsrichtung in Bezug auf den Abdeckring 40 erstrecken. Aus der Darstellung gemäß Figur 13 sowie aus der Darstellung gemäß Figur 14 geht hervor, dass sich die geteilte Nocke 110 im Abdeckring 140 in der 12 Uhr-Position befindet. Alternativ wäre es auch möglich, die geteilt ausgebildete Nocke 110 in der 3 Uhr-, der 6 Uhr- oder der 9 Uhr-Position am Umfang des Abdeckringes 40 vorzusehen. Durch die geteilt ausgebildete Nocke 110, die mit einer im Filtergehäuse 12 verlaufenden Rippe 118 zusammenwirkt, ist ein lagerichtiger Einbau des Hauptfilterelementes 22 im Filtergehäuse 12 gewährleistet.

Figur 14 zeigt die am Filtergehäuse 12 angespritzte Rippe 118, die von der ersten Schulter 112 bzw. der zweiten Schulter 114 der geteilt ausgebildeten Nocke 110 umschlossen ist. Während über die geteilt ausgebildete Nocke 112 der lagerichtige Einbau des Hauptfilterelementes 22 im Filtergehäuse 12 gewährleistet ist, wird das Schwingen des Hauptfilterelementes 22 im in das Filtergehäuse 12 eingebauten Zustand durch die weiteren am Umfang des Abdeckringes 40 ausgebildeten Ausrichte- und Zentriernocken 50 gedämpft.

Der Darstellung gemäß der Figuren 15 und 16 sind alle am Umfang des Abdeckringes 40 des auswechselbaren Hauptfilterelementes 22 angeordneten Ausrichte- bzw. Zentriernocken 50, 112 zu entnehmen. Aus der Darstellung gemäß der Figuren 15 und 16 geht hervor, dass sich die geteilte Nocke 112 jeweils in der 12 Uhr-Position in Bezug auf den Abdeckring 40 erstreckt. Während Figur 15 die Griffmulde 52 unterhalb der Dichtung 36 des Hauptfilterelementes 22 zeigt, ist der Darstellung gemäß Figur 16 die Einbauposition des Hauptfilterelementes 22 im Filtergehäuse 12 zu entnehmen. Aus dieser Figur geht hervor, dass sich der Abdeckring 40 mit seinen Ausrichte- und Zentriernocken 50 an der Innenseite des Filtergehäuses 12 abstützt und mithin gegen Schwingungen gegen das Filtergehäuse 12 gedämpft ist und durch die geteilt ausgebildete Nocke 110 der lagerichtige Einbau des Hauptfilterelementes 22 im Filtergehäuse 12 gewährleistet ist.

## Patentansprüche

1. Filtereinrichtung (10), insbesondere Luftfilter für eine Brennkraftmaschine, mit einem in einem Filtergehäuse (12) angeordneten Hauptfilterelement (22), das von einem zu filtrierenden Fluid zu durchströmen ist, wobei das Hauptfilterelement (22) als Mehrfachbalgfilter mit mindestens zwei radial ineinandergesetzten Filterbälgen (32, 34) ausgebildet ist, mindestens ein Filterbalg (32, 34) in Radialrichtung zu durchströmen ist und zwischen den Filterbälgen (32, 34) ein Strömungsraum (44) für das Fluid gebildet ist, der mit einer Stirnseite des Hauptfilterelements (22) kommuniziert, wobei jeder Filterbalg (32, 34) als Sternfilter mit sternförmig angeordneten Filterfalten ausgebildet ist und an mindestens einer Stirnseite des Hauptfilterelements (22) eine Dichtung (36) zwischen einem der Filterbälge (32, 34) und dem Filtergehäuse (12) angeordnet ist, **dadurch gekennzeichnet, dass** die abströmseitige axiale Stirnseite des radial außen liegenden Filterbalges von einem ersten Abdeckring zur Verhinderung einer axialen Abströmung überdeckt ist, wobei der innenliegende Anströmraum des inneren Filterbalges abströmseitig von einer Abdeckscheibe verschlossen ist, wobei die abströmseitige axiale Stirnseite des innenliegenden Filterbalges frei von einer Abdeckung ist, wobei der Strömungsraum (44) an der Anströmseite durch einen zweiten Abdeckring verschlossen ist, wobei der Abdeckring anströmseitig die axialen Stirnseiten der beiden Filterbälge überdeckt, , wobei das Hauptfilterelement (22) durch einen in einen Gehäuseschacht (66) des Filtergehäuses (12) einführbaren Seiteneinschub (38) dichtend an das Filtergehäuse (12) angestellt ist,
oder das Hauptfilterelement (22) mittels einer Verriegelung (74) gegen das Filtergehäuse (12) dichtend angestellt ist,
oder das Hauptfilterelement (22) mittels einer Dichtung (36, 96, 98) gegen das Filtergehäuse (12, 104) abgedichtet ist.

2. Filtereinrichtung nach Anspruch 1, **dadurch gekennzeichnet, dass** zumindest ein Teil unmittelbar zueinander benachbarter Filterfalten an einer axialen Stirnseite eines Filterbalges (32, 34) eine Stirnkantenverleimung (60) aufweisen.

3. Filtereinrirhtung nach einem der Ansprüche 1 bis 2, **dadurch gekennzeichnet, dass** die Filterbälge als Einzelbälge (32, 34) ausgebildet sind.

4. Filtereinrichtung nach einem der Ansprüche 1 bis 3, **dadurch gekennzeichnet, dass** einer der Filterbälge (32, 34) zylindrisch ausgebildet ist.

5. Filtereinrichtung nach einem der Ansprüche 1 bis 3, **dadurch gekennzeichnet, dass** einer der Filterbälge (32, 34) konisch ausgebildet ist.

6. Filtereinrichtung nach einem der Ansprüche 1 bis 5, **dadurch gekennzeichnet, dass** der Strömungsraum (44) zwischen den Filterbälgen (32, 34) einen sich über die axiale Länge des Hauptfilterelementes (22) ändernden Querschnitt aufweist.

7. Filtereinrichtung nach Anspruch 6, **dadurch gekennzeichnet, dass** der Querschnitt des Strömungsraumes (44) zur Abströmseite (16) hin zunimmt.

8. Filtereinrichtung nach einem der Ansprüche 1 bis 2, **dadurch gekennzeichnet, dass** der Strömungsraum (44) zwischen den Filterbälgen (32, 34) von einem Stützgerüst (30) eingefasst ist.

9. Filtereinrichtung nach einem der Ansprüche 1 bis 8, da **dadurch gekennzeichnet, dass** der Strömungsraum (44) den Reinraum bildet und axial zur Anströmseite (14) verschlossen ist.

10. Filtereinrichtung nach einem der Ansprüche 1 bis 9, **dadurch gekennzeichnet, dass** die den Strömungsraum (44) radial begrenzenden Filterbälge (32, 34) jeweils radial in Richtung des Strömungsraumes (44) durchströmt werden.

11. Filtereinrichtung nach Anspruch 1, **dadurch gekennzeichnet, dass** die Dichtung (36) an der Abströmseite (16) im Übergang zwischen axialer Stirnseite und radial außenliegender Mantelfläche des Hauptfilterelementes (22) angeordnet ist.

12. Filtereinrichtung nach Anspruch 1, **dadurch gekennzeichnet, dass** die Dichtung (36) zwischen dem Hauptfilterelement (22) und dem Filtergehäuse (12) bzw. einem mit dem Filtergehäuse (12) verbundenen Bauteil (42) eingeklemmt ist.

13. Filtereinrichtung nach Anspruch 1, **dadurch gekennzeichnet, dass** das Hauptfilterelement (22) quer oder parallel zur Durchströmrichtung in das Filtergehäuse (12) einzusetzen bzw. aus dem Filtergehäuse (12) zu entnehmen ist.

14. Filtereinrichtung nach Anspruch 1, **dadurch gekennzeichnet, dass** mindestens eine weitere Filtereinheit (20, 24) im Filtergehäuse (12) vorgesehen ist, wobei das Hauptfilterelement (22) und die weitere Filtereinheit (20, 24) hintereinanderliegend angeordnet sind und eine gemeinsame Durchströmrichtung für das zu reinigende Fluid besitzen.

15. Filtereinrichtung nach Anspruch 14, **dadurch gekennzeichnet, dass** die weitere Filtereinheit als Vorabscheider (20), insbesondere als Zyklon-Vorabscheider ausgebildet ist, der dem Hauptfilterelement (22) vorgeschaltet ist.

16. Filtereinrichtung nach Anspruch 14 oder 15, **dadurch gekennzeichnet, dass** die weitere Filtereinheit als Feinfilter (24) ausgebildet ist, der dem Hauptfilterelement (22) nachgeschaltet ist.

17. Filtereinrichtung nach Anspruch 1, **dadurch gekennzeichnet, dass** der Seiteneinschub (38) Einschubschienen (70) umfasst, die auf Führungsabsätzen des Gehäuseschachtes (66) des Filtergehäuses (12) geführt sind.

18. Filtereinrichtung nach Anspruch 1, **dadurch gekennzeichnet, dass** die Dichtung (36) auf einem ringförmig verlaufenden Absatz (46) an der Oberseite des Hauptfilterelementes (22) aufgenommen ist.

19. Filtereinrichtung nach Anspruch 1, **dadurch gekennzeichnet, dass** das Hauptfilterelement (22) zumindest eine eine Ein-Hand-Bedienung ermöglichende Griffmulde (52) oder zumindest ein Eingriffstück (52) umfasst.

20. Filtereinrichtung nach Anspruch 1, **dadurch gekennzeichnet, dass** an einem ringförmig ausgebildeten Abdeckelement (40, 90) Halte- und Zentriernocken (50) ausgebildet sind, die das Hauptfilterelement (22) im Gehäuseschacht (66) des Filtergehäuses (12) ausrichten.

21. Filtereinrichtung gemäß Anspruch 1, **dadurch gekennzeichnet, dass** am Filtergehäuse (12) in Gelenken (76) eine Verriegelung (74) aufgenommen ist.

22. Filtereinrichtung gemäß Anspruch 1, **dadurch gekennzeichnet, dass** der radial außenliegende der als Einzelbälge ausgebildeten Filterbälge (32, 34) eine Konizität (106) in Bezug auf die Innenseite des Filtergehäuses (12) aufweist, die eine radiale Anströmung der äußeren Mantelfläche des zweiten, radial außenliegenden Filterbalges (34) ermöglicht.

## Claims

1. Filtering device (10), in particular air filter for an internal combustion engine, with a main filter element (22) disposed in a filter housing (12) and which is to be flowed through by a fluid to be filtered, the main filter element (22) being designed as multiple filter bellows with at least two radially nested filter bellows (32, 34), at least one filter bellows (32, 34) being flowed through in radial direction and a flow chamber (44) being formed for the fluid between the filter bellows (32, 34), which communicates with a front face of the main filter element (22), each filter bellows (32, 34) being designed as star filter with filter folds disposed in a star-shaped manner and a seal (36) being disposed on at least one front face of the main filter element (22) between one of the filter bellows (32, 34) and the filter housing (12), **characterized in that** the outflow-sided axial front face of the radially outside lying filter bellows is covered by a first cover ring for avoiding an axial outflow, the inside-lying inflow chamber of the inner filter bellows being closed on the outflow side by a cover plate, the outflow-sided axial front face of the inside-lying filter bellows being uncovered, the flow chamber (44) on the inflow side being closed by a second cover ring, the cover ring covering on the inflow side the axial front faces of the two filter bellows,
the main filter element (22) contacting sealingly the filter housing (12) by means of a lateral slide-in module (38) insertable into a housing shaft (66) of the filter housing (12),
or the main filter element (22) sealingly contacting the filter housing (12) by means of an interlock (74),
or the main filter element (22) being sealed against the filter housing (12, 104) by means of a seal (36, 96, 98).

2. Filtering device according to claim 1, **characterized in that** at least one part of filter folds directly adjacent to one another feature a front edge gluing (60) on an axial front face of a filter bellows (32, 34).

3. Filtering device according to one of the claims 1 to 2, **characterized in that** the filter bellows are designed as individual bellows (32, 34).

4. Filtering device according to one of the claims 1 to 3, **characterized in that** one of the filter bellows (32, 34) has a cylindrical design.

5. Filtering device according to one of the claims 1 to 3, **characterized in that** one of the filter bellows (32, 34) has a conical design.

6. Filtering device according to one of the claims 1 to 5, **characterized in that** the flow chamber (44) between the filter bellows (32, 34) features a cross-section that changes across the axial length of the main filter element (22).

7. Filtering device according to claim 6, **characterized in that** the cross-section of the flow chamber (44) increases towards the outflow side (16).

8. Filtering device according to one of the claims 1 to 2, **characterized in that** the flow chamber (44) between the filter bellows (32, 34) is surrounded by a support frame (30).

9. Filtering device according to one of the claims 1 to 8, **characterized in that** the flow chamber (44) forms the clean chamber and is axially closed towards the inflow side (14).

10. Filtering device according to one of the claims 1 to 9, **characterized in that** the filter bellows (32, 34) radially defining the flow chamber (44) are each radially flowed through in the direction of the flow chamber (44).

11. Filtering device according to claim 1, **characterized in that** the seal (36) on the outflow side (16) is disposed in the transition between axial front face and radial outer girth area of the main filter element (22).

12. Filtering device according to claim 1, **characterized in that** the seal (36) is clamped between the main filter element (22) and the filter housing (12) or a component (42) connected with the filter housing (12).

13. Filtering device according to claim 1, **characterized in that** the main filter element (22) is to be inserted into the filter housing (12) or removed from the filter housing (12) transversely or parallel to the flow direction.

14. Filtering device according to claim 1, **characterized in that** at least another filter unit (20, 24) is provided in the filter housing (12), the main filter element (22) and the other filter unit (20, 24) being disposed one behind the other and having a common flow direction for the fluid to be purified.

15. Filtering device according to claim 14, **characterized in that** the other filter unit is designed as pre-separator (20), in particular as cyclone pre-separator, which is disposed upstream of the main filter element (22).

16. Filtering device according to claim 14 or 15, **characterized in that** the other filter unit is designed as fine filter (24), which is disposed downstream of the main filter element (22).

17. Filtering device according to claim 1, **characterized in that** the lateral slide-in module (38) comprises slide-in rails (70), which are guided on guiding shoulders of the housing shaft (66) of the filter housing (12).

18. Filtering device according to claim 1, **characterized in that** the seal (36) is accommodated on an annularly extending shoulder (46) on the upper side of the main filter element (22).

19. Filtering device according to claim 1, **characterized in that** the main filter element (22) comprises at least one handle recess (52) allowing a one-hand operation or at least one grasping piece (52).

20. Filtering device according to claim 1, **characterized in that** retaining and centering cams (50), which align the main filter element (22) in the housing shaft (66) of the filter housing (12), are realized at an annularly designed cover element (40, 90).

21. Filtering device according to claim 1, **characterized in that** an interlock (74) is accommodated in joints (76) at the filter housing (12).

22. Filtering device according to claim 1, **characterized in that** the radially outside-lying filter bellows of the filter bellows (32, 34) designed as individual bellows features a conicity (106) with regard to the interior side of the filter housing (12), which enables a radial inflow of the outer girth area of the second radially outside-lying filter bellows (34).

## Revendications

1. Dispositif de filtration (10), en particulier filtre à air pour un moteur à combustion interne, avec un élément filtrant principal (22) disposé dans un boîtier de filtre (12) et destiné à être parcouru par un fluide à filtrer, l'élément filtrant principal (22) étant réalisé sous la forme d'un filtre à plusieurs soufflets constitué d'au moins deux soufflets de filtre (32, 34) emboîtés radialement, au moins un des soufflets de filtre (32, 34) pouvant être parcouru dans le sens radial, et un espace d'écoulement (44) étant formé pour le fluide entre les soufflets de filtre (32, 34) et communiquant avec une face frontale de l'élément filtrant principal (22), chacun des soufflets de filtre (32, 34) étant réalisé sous la forme d'un filtre en étoile dont les plis sont agencés sous la forme d'une étoile, et un joint (36) étant disposé sur au moins une face frontale de l'élément filtrant principal (22) entre l'un des soufflets de filtre (32, 34) et le boîtier de filtre (12), **caractérisé en ce que** la face frontale axiale côté sortie du soufflet de filtre situé à l'extérieur en sens radial est recouverte par une première bague de recouvrement pour éviter un écoulement axial, l'espace d'entrée intérieur du soufflet intérieur étant obturé côté sortie par une plaque de recouvrement, la face frontale axiale côté sortie du soufflet de filtre situé à l'intérieur n'étant pas recouverte, l'espace d'écoulement (44) côté entrée étant obturé par une deuxième bague de recouvrement, la bague de recouvrement recouvrant côté entrée les faces frontales axiales des deux soufflets de filtre,
l'élément filtrant principal (22) étant appliqué de manière étanche contre le boîtier de filtre (12) par un module latéral insérable (38) pouvant être introduit dans une gaine de boîtier (66) du boîtier de filtre (12),
ou l'élément filtrant principal (22) étant appliqué de manière étanche contre le boîtier de filtre (12) au moyen d'un élément de verrouillage (74),
ou l'élément filtrant principal (22) étant étanché par rapport au boîtier de filtre (12, 104) au moyen d'un joint (36, 96, 98).

2. Dispositif de filtration selon la revendication 1, **caractérisé en ce qu**'au moins certains plis de filtre directement adjacents sont dotés, au niveau d'une face frontale axiale d'un soufflet de filtre (32, 34), d'un collage des arêtes frontales (60).

3. Dispositif de filtration selon l'une des revendications 1 à 2, **caractérisé en ce que** les soufflets de filtre sont exécutés en tant que soufflets individuels (32, 34).

4. Dispositif de filtration selon l'une des revendications 1 à 3, **caractérisé en ce qu**'un des soufflets de filtre (32, 34) est exécuté de manière cylindrique.

5. Dispositif de filtration selon l'une des revendications 1 à 3, **caractérisé en ce qu**'un des soufflets de filtre (32, 34) est exécuté de manière conique.

6. Dispositif de filtration selon l'une des revendications 1 à 5, **caractérisé en ce que** l'espace d'écoulement (44) présente, entre les soufflets de filtre (32, 34), une section qui change sur la longueur axiale de l'élément filtrant principal (22).

7. Dispositif de filtration selon la revendication 6, **caractérisé en ce que** la section de l'espace d'écoulement (44) augmente en direction du côté sortie (16).

8. Dispositif de filtration selon l'une des revendications 1 à 2, **caractérisé en ce que** l'espace d'écoulement (44) situé entre les soufflets de filtre (32, 34) est bordé d'une structure d'appui (30).

9. Dispositif de filtration selon l'une des revendications 1 à 8, **caractérisé en ce que** l'espace d'écoulement (44) forme l'espace pur et est obturé en sens axial par rapport au côté entrée (14).

10. Dispositif de filtration selon l'une des revendications 1 à 9, **caractérisé en ce que** les soufflets de filtre (32, 34) limitant l'espace d'écoulement (44) en sens radial sont respectivement parcourus en sens radial en direction de l'espace d'écoulement (44).

11. Dispositif de filtration selon la revendication 1, **caractérisé en ce que** le joint (36) du côté sortie (16) est disposé dans la transition entre la face frontale axiale et la surface d'enveloppe située à l'extérieur en sens radial de l'élément filtrant principal (22).

12. Dispositif de filtration selon la revendication 1, **caractérisé en ce que** le joint (36) est serré entre l'élément filtrant principal (22) et le boîtier de filtre (12) ou un composant (42) relié au boîtier de filtre (12).

13. Dispositif de filtration selon la revendication 1, **caractérisé en ce que** l'élément filtrant principal (22) peut être monté dans le boîtier de filtre (12) ou être retiré de ce boîtier de filtre (12) en travers du ou parallèlement au sens de passage.

14. Dispositif de filtration selon la revendication 1, **caractérisé en ce qu**'au moins une autre unité filtrante (20, 24) est prévue dans le boîtier de filtre (12), l'élément filtrant principal (22) et l'autre unité filtrante (20, 24) étant disposés l'un derrière l'autre et possédant un sens de passage commun pour le fluide à purifier.

15. Dispositif de filtration selon la revendication 14, **caractérisé en ce que** l'autre unité filtrante est exécutée en tant que pré-séparateur (20), notamment en tant que pré-séparateur à cyclone qui est monté en amont de l'élément filtrant principal (22).

16. Dispositif de filtration selon la revendication 14 ou 15, **caractérisé en ce que** l'autre unité filtrante est exécutée en tant que filtre fin (24) qui est monté en aval de l'élément filtrant principal (22).

17. Dispositif de filtration selon la revendication 1, **caractérisé en ce que** le module latéral insérable (38) comprend des rails d'introduction (70) qui sont guidés sur des épaulements de guidage de la gaine de boîtier (66) du boîtier de filtre (12).

18. Dispositif de filtration selon la revendication 1, **caractérisé en ce que** le joint (36) est logé sur un épaulement (46) annulaire sur le côté supérieur de l'élément filtrant principal (22).

19. Dispositif de filtration selon la revendication 1, **caractérisé en ce que** l'élément filtrant principal (22) comprend au moins une poignée en creux (52) autorisant une commande à une seule main ou au moins un élément en creux (52).

20. Dispositif de filtration selon la revendication 1, **caractérisé en ce que** des cames de maintien et de centrage (50) qui positionnent l'élément filtrant principal (22) dans la gaine de boîtier (66) du boîtier de filtre (12) sont exécutées sur un élément de couverture (40, 90) en forme d'anneau.

21. Dispositif de filtration selon la revendication 1, **caractérisé en ce qu**'un élément de verrouillage (74) est logé dans des articulations (76) sur le boîtier de filtre (12).

22. Dispositif de filtration selon la revendication 1, **caractérisé en ce que** le soufflet de filtre situé à l'extérieur en sens radial des soufflets de filtre (32, 34) exécutés comme soufflets individuels présente une conicité (106) par rapport à la face intérieure du boîtier de filtre (12), laquelle autorise une arrivée radiale de fluide sur la surface d'enveloppe extérieure du deuxième soufflet de filtre (34) situé à l'extérieur en sens radial.
